(19) Europäisches Patentamt
European Patent Office
Office européen des brevets

(11) **EP 1 975 824 A1**

(12) **EUROPEAN PATENT APPLICATION**

(43) Date of publication:
**01.10.2008 Bulletin 2008/40**

(51) Int Cl.:
***G06F 17/30*** *(2006.01)*

(21) Application number: **08250306.1**

(22) Date of filing: **24.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.03.2007 JP 2007094018**

(71) Applicant: **Sony Corporation**
**Minato-ku**
**Tokyo (JP)**

(72) Inventors:
• **Kobayashi, Yoshiyuki**
**c/o Sony Corporation**
**Tokyo (JP)**
• **Ogino, Hiroshi**
**c/o Sony Corporation**
**Tokyo (JP)**
• **Mukaiyama, Ryo**
**c/o Sony Corporation**
**Tokyo (JP)**
• **Fukasawa, Soichi**
**c/o Sony Corporation**
**Tokyo (JP)**

(74) Representative: **DeVile, Jonathan Mark et al**
**D Young & Co**
**120 Holborn**
**London EC1N 2DY (GB)**

(54) **Information processing**

(57) Disclosed herein is an information processing apparatus that presents, to a user who performs a search among a plurality of contents distributed over a search space formed using N, N is an integer greater than one, types of search axes, assistant information for assisting the user with the search. The apparatus includes: specification means for specifying a first range; range presentation means for presenting a state of distribution of contents within the first range, and presenting the state of the distribution of the contents within a second range; and narrowing-down axis presentation means for selecting, and presenting the narrowing-down axis candidate or candidates to the user.

FIG. 2

**Description**

**Field of the Invention**

The present invention relates to information processing. Embodiments of the present invention relate to an information processing apparatus and method, and a program. In particular, embodiments of the present invention relate to an information processing apparatus and method, and a program which enable simple and adequate search for a content which a user desires to watch or listen to, for example.

**Background of the Invention**

Classification of contents, such as tunes or video images, using metadata added to the contents is prevalent today (see Japanese Patent Laid-open No. 2000-207415, hereinafter referred to as Patent Document 1).

**Summary of the Invention**

Various respective aspects and features of the invention are defined in the appended claims. Combinations of features from the dependent claims may be combined with features of the independent claims as appropriate and not merely as explicitly set out in the claims.

Recent storage devices have significantly large storage capacity and are capable of storing an immense number of contents. As such, there is an increasing demand for simple and adequate search for a content which a user desires to watch or listen to, for example, among the immense number of contents. However, simple adoption of known techniques, including the technique described in Patent Document 1, does not fully satisfy such a demand.

Embodiments of the present invention have been devised in view of such a situation, and enable simple and adequate search for a content which the user desires to watch or listen to, for example.

According to one embodiment of the present invention, there is provided an information processing apparatus that presents, to a user who performs a search among a plurality of contents distributed over a search space formed using N (N is an integer greater than one) types of search axes, assistant information for assisting the user with the search. The apparatus includes: specification means; range presentation means; and narrowing-down axis presentation means. The specification means specifies a first range, the first range being a part or whole of the search space. The range presentation means presents a state of distribution of contents within the first range specified by the specification means, and, when, with respect to K (K is an integer equal to or less than N) types of search axes among the N types of search axes, another type of search axis has been specified by the user as a narrowing-down axis, presents the state of the distribution of the contents within a second range, the second range corresponding to the first range except that the K types of search axes are replaced with the narrowing-down axis or axes. The narrowing-down axis presentation means selects, from among different types of search axes from the N types of search axes used to form the first range, K or more types of search axes as a narrowing-down axis candidate according to a predetermined selection rule, and presents the narrowing-down axis candidate or candidates to the user.

According to another embodiment of the present invention, there is provided an information processing method employed by an information processing apparatus that presents, to a user who performs a search among a plurality of contents distributed over a search space formed using N (N is an integer greater than one) types of search axes, assistant information for assisting the user with the search. The method includes the steps of: specifying a first range, the first range being a part or whole of the search space; presenting a state of distribution of contents within the first range and presenting the state of the distribution of the contents within a second range; and selecting, and presenting the narrowing-down axis candidate or candidates to the user. The presenting step presents a state of distribution of contents within the first range specified in the specifying, and, when, with respect to K (K is an integer equal to or less than N) types of search axes among the N types of search axes, another type of search axis has been specified by the user as a narrowing-down axis, presents the state of the distribution of the contents within a second range, the second range corresponding to the first range except that the K types of search axes are replaced with the narrowing-down axis or axes. The selecting step selects from among different types of search axes from the N types of search axes used to form the first range, K or more types of search axes as a narrowing-down axis candidate according to a predetermined selection rule, and presents the narrowing-down axis candidate or candidates to the user.

According to yet another embodiment of the present invention, there is provided a program for causing a computer that controls a process of presenting, to a user who performs a search among a plurality of contents distributed over a search space formed using N (N is an integer greater than one) types of search axes, assistant information for assisting the user with the search to execute steps of: specifying a first range, the first range being a part or whole of the search space; presenting a state of distribution of contents within the first range and presenting the state of the distribution of the contents within a second range; and selecting, and presenting the narrowing-down axis candidate or candidates to the user. The presenting step presents a state of distribution of contents within the first range specified in the specifying, and, when, with respect to K (K is an integer equal to or less than N) types of search axes among the N types of search axes, another type of search axis has been specified by the user as a narrowing-down axis, presents the state of the distribution of the contents within a second range, the second range corresponding to the first range except that the K types of search axes are replaced with the narrowing-down axis or axes. The selecting step selects from among different types of search axes from the N types of search axes used to form the first range, K or more types of search axes as a narrowing-down axis candidate according to a predetermined selection rule, and presents the narrowing-down axis candidate or candidates to the user.

In the information processing apparatus, the information processing method, and the program according to one embodiment of the present invention, a user who performs a search among a plurality of contents distributed over a search space formed using N (N is an integer greater than one) types of search axes is presented with assistant information for assisting the user with the search in the following manner. That is, when a first range, which is a part or whole of the search space, has been specified, the state of distribution of contents within the specified first range is presented. If it is determined that the user will perform a further search among these contents to narrow down the search, the state of the distribution of the contents within a second range is presented. The second range corresponds to the first range except that, out of the N types of search axes, the K (K is an integer equal to or less than N) types of search axes are replaced with a different type(s) of search axis or axes, i.e., the narrowing-down axis or axes. In addition, from among different types of search axes from the N types of search axes used to form the first range, K or more types of search axes are selected according to a predetermined selection rule, and the selected K or more types of search axes are presented as the narrowing-down axis candidate(s) to the user.

As described above, a technique for searching for a content can be provided according to the above-described embodiments of the present invention. In particular, simple and adequate search for a content that the user desires to watch or listen to, for example, becomes possible.

**Brief Description of the Drawings**

Embodiments of the invention will now be described with reference to the accompanying drawings, throughout which like parts are referred to by like references, and in which:

FIG. 1 shows examples of search axes used in a tune search system that is an information processing apparatus in accordance with one embodiment of the present invention;

FIG. 2 shows an example of a map presented by the tune search system;

FIG. 3 shows examples of maps presented by the tune search system, especially an example of a map showing a specified range in magnified form;

FIGS. 4 to 6 show examples of lists of narrowing-down axis candidates presented by the tune search system;

FIGS. 7 to 13 show specific examples used for describing a method for determining the narrowing-down axis candidates presented by the tune search system;

FIG. 14 shows examples of maps presented by the tune search system, especially an example of a map in which a search axis used as the y-axis has been replaced with a narrowing-down axis;

FIG. 15 illustrates an example of a procedure of reproducing choruses of currently-selected tunes successively, which is one procedure performed by the tune search system;

FIG. 16 illustrates an example of a procedure of reproducing the currently-selected tunes in accordance with a playlist, which is one procedure performed by the tune search system;

FIG. 17 is a flowchart illustrating an exemplary search operation procedure performed by the tune search system;

FIG. 18 is a flowchart illustrating an exemplary search axis replacing operation procedure performed at step S4 in the search operation procedure as shown in FIG. 17;

FIG. 19 is a flowchart illustrating an exemplary narrowing-down axis selecting operation procedure performed at step S6 in the search operation procedure as shown in FIG. 17;

FIG. 20 is a flowchart illustrating an exemplary tune selecting operation procedure performed at step S8 in the search operation procedure as shown in FIG. 17;

FIG. 21 is a flowchart illustrating an exemplary range specification operation/magnifying operation procedure performed at step S10 in the search operation procedure as shown in FIG. 17;

FIG. 22 is a flowchart illustrating an exemplary reproducing operation procedure performed at step S12 in the search operation procedure as shown in FIG. 17;

FIG. 23 is a functional block diagram illustrating an exemplary functional structure of the tune search system;

FIG. 24 is a functional block diagram illustrating details of an exemplary functional structure of a narrowing-down axis presentation section as shown in FIG. 23; and

FIG. 25 is a block diagram illustrating an exemplary structure in the case where at least a part of the tune search system is formed by a personal computer.

## Description of the Example Embodiments

Hereinafter, embodiments of the present invention will be described. Correspondence between the constituent features of the present invention and the embodiment that will be described in a detailed description as presented below is exemplified as follows. Note that this preliminary description is meant to confirm that an embodiment that supports the present invention is described in the detailed description. Therefore, even if there is an embodiment that is described in the detailed description but not described in this preliminary description as corresponding to a constituent feature of the present invention, that does not mean that that embodiment does not correspond to that constituent feature. Conversely, even if a certain embodiment is described in this preliminary description as corresponding to a certain constituent feature of the present invention, that does not mean that the certain embodiment does not correspond to any other constituent feature.

Moreover, this preliminary description should not be interpreted as meaning that all inventive features of the embodiment of the present invention as will be described below are recited in the appended claims. In other words, this preliminary description should not be interpreted as negating any inventive feature whose specific example is described in connection with the embodiment of the present invention as will be described below but which is not recited in the appended claims of the present application, i.e., any inventive feature that may be claimed in a divisional application or additionally claimed in the present application by amendment in the future.

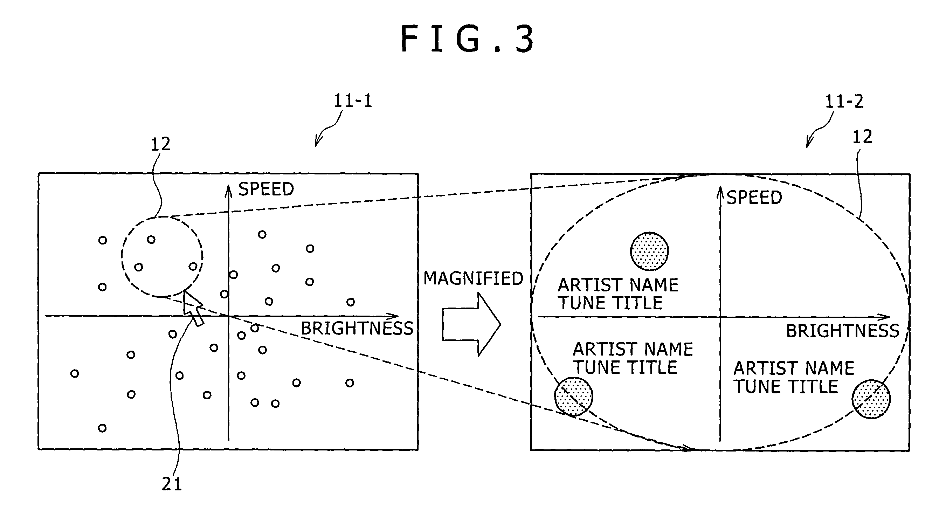

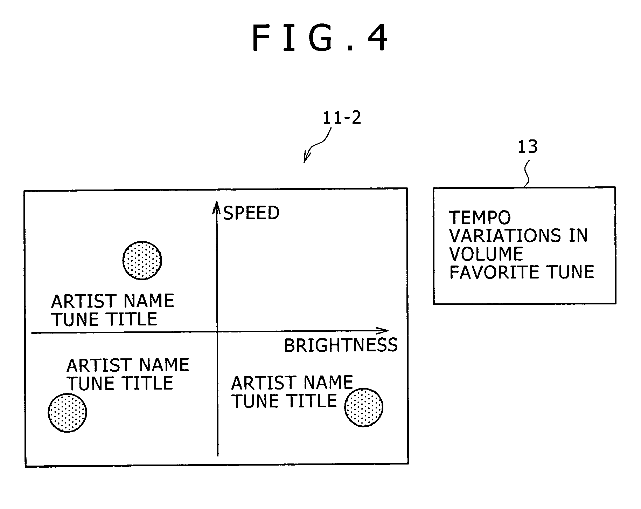

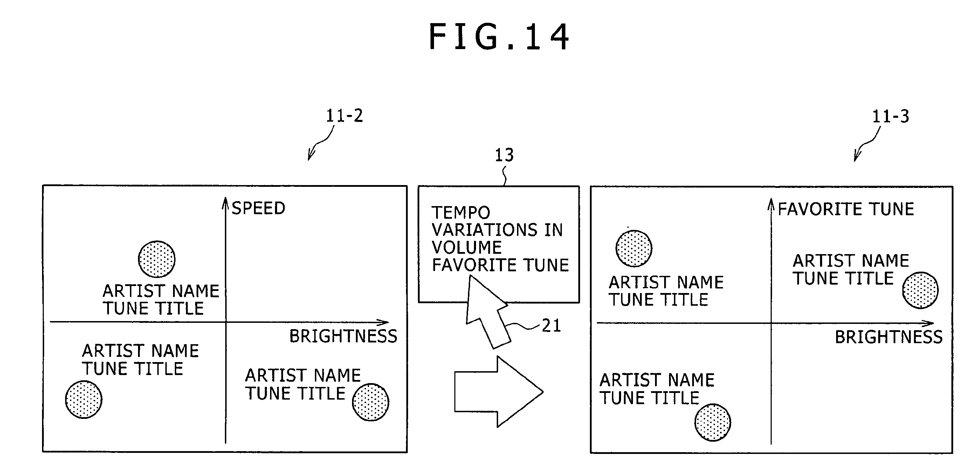

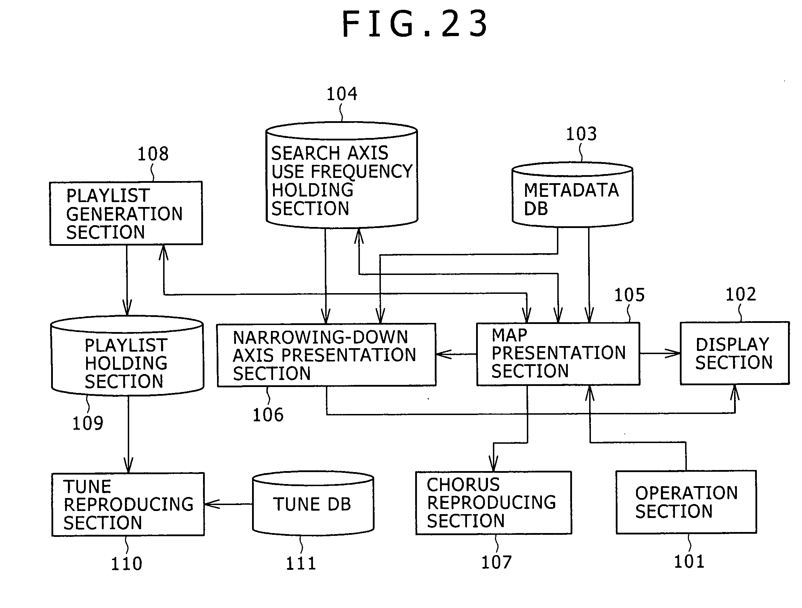

An information processing apparatus according to one embodiment of the present invention is an information processing apparatus (e.g., a tune search system as shown in FIG. 23) that presents, to a user who performs a search among a plurality of contents distributed over a search space (e.g., a map 11-1 as shown in FIG. 3 in the case where N = 2) formed using N (N is an integer greater than one) types of search axes, assistant information for assisting the user with the search. The apparatus includes: specification means (e.g., an operation section 101 as shown in FIG. 23); range presentation means (e.g., a map presentation section 105 as shown in FIG. 23); and narrowing-down axis presentation means (e.g., a narrowing-down axis presentation section 106 as shown in FIG. 23 for presenting a list 13 as shown in FIGS. 4 and 14). The specification means for specifying a first range (e.g., a range 12 as shown in FIG. 3), the first range is a part or whole of the search space. The range presentation means (e.g., a map presentation section 105 as shown in FIG. 23) for presenting a state of distribution of contents within the first range (e.g., a map 11-2 as shown in FIG. 3) specified by the specification means, and, when, with respect to K (K is an integer equal to or less than N) types of search axes among the N types of search axes, another type of search axis has been specified by the user as a narrowing-down axis, presenting the state of the distribution of the contents within a second range (e.g., a map 11-3 as shown in FIG. 14 in the case where K = 1), the second range corresponding to the first range except that the K types of search axes are replaced with the narrowing-down axis or axes. The narrowing-down axis presentation means (e.g., a narrowing-down axis presentation section 106 as shown in FIG. 23 for presenting a list 13 as shown in FIGS. 4 and 14) for selecting, from among different types of search axes from the N types of search axes used to form the first range, K or more types of search axes as a narrowing-down axis candidate according to a predetermined selection rule, and presenting the narrowing-down axis candidate or candidates to the user.

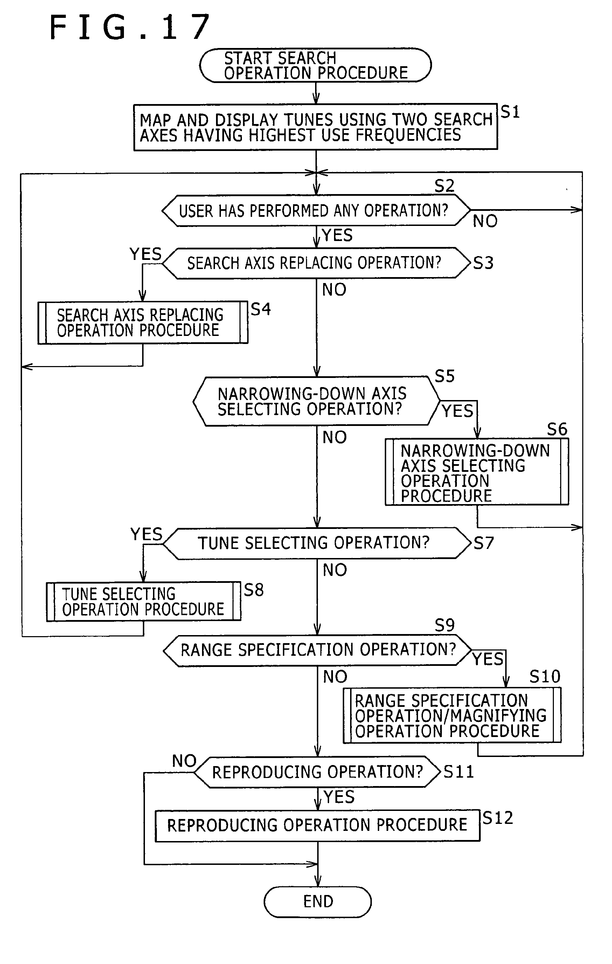

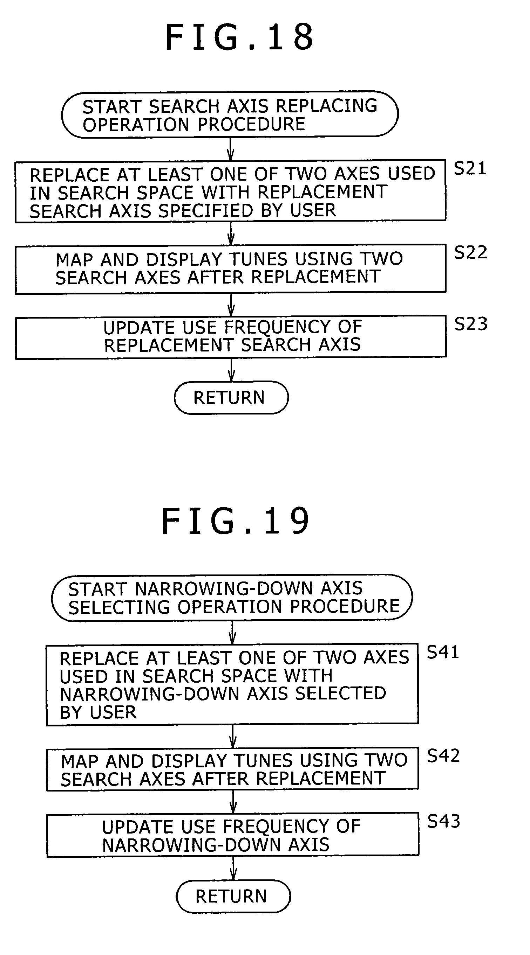

The specification means may further specify, out of the narrowing-down axis candidates presented by the narrowing-down axis presentation means to the user, K types of narrowing-down axis candidates selected by the user as the K types of narrowing-down axes (e.g., determine "YES" at a process of step S5 in FIG. 17), and when the K types of narrowing-down axes have been specified by the specification means. The range presentation means may present the state of the distribution of the contents within the second range while replacing the K types of search axes among the N types of search axes with the K types of narrowing-down axes specified by the specification means (e.g., perform a narrowing-down axis selecting operation procedure at step S6 in FIG. 17, which is illustrated in FIG. 19).

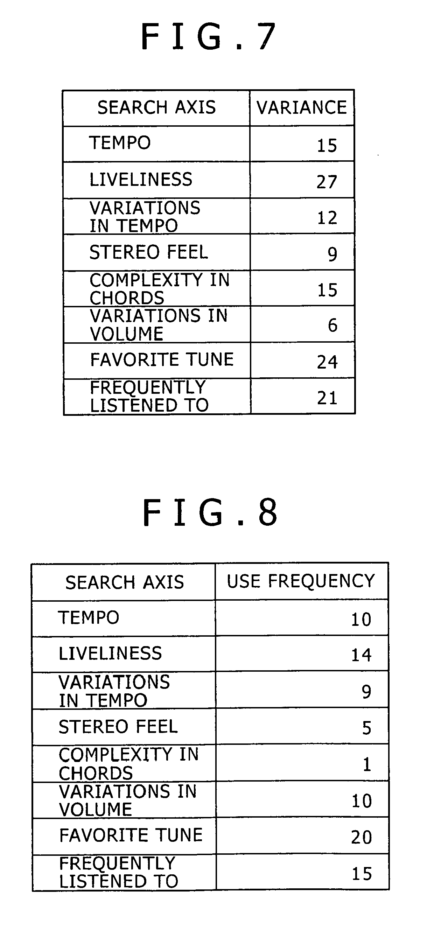

The selection rule may be a rule using a frequency of use by the user of each of the search axes selectable as the narrowing-down axis candidates (see FIGS. 8 to 10, for example).

The selection rule may be a rule using a variance or entropy of the contents distributed over the first range with respect to each of the search axes selectable as the narrowing-down axis candidates (see FIG. 7, for example).

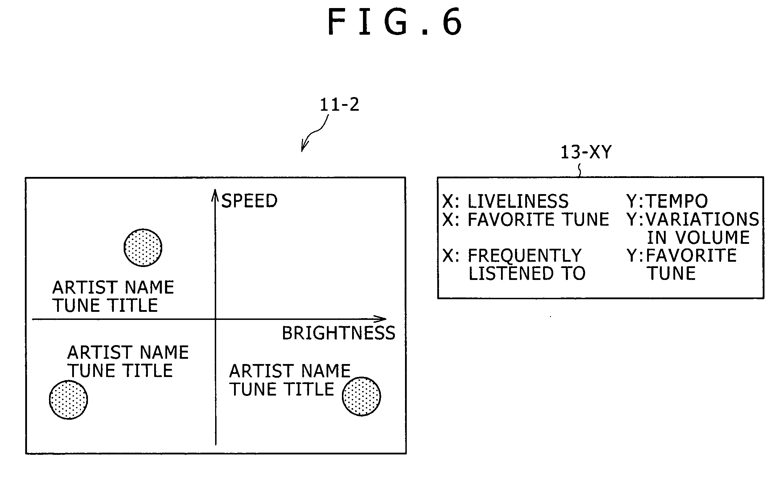

The narrowing-down axis presentation means may further select one or more combinations of K types of search axes according to a predetermined selection rule, and present the one or more combinations of K types of search axes to the user as candidates for the K types of narrowing-down axes (for example, present a list 13-XY as shown in FIG. 6).

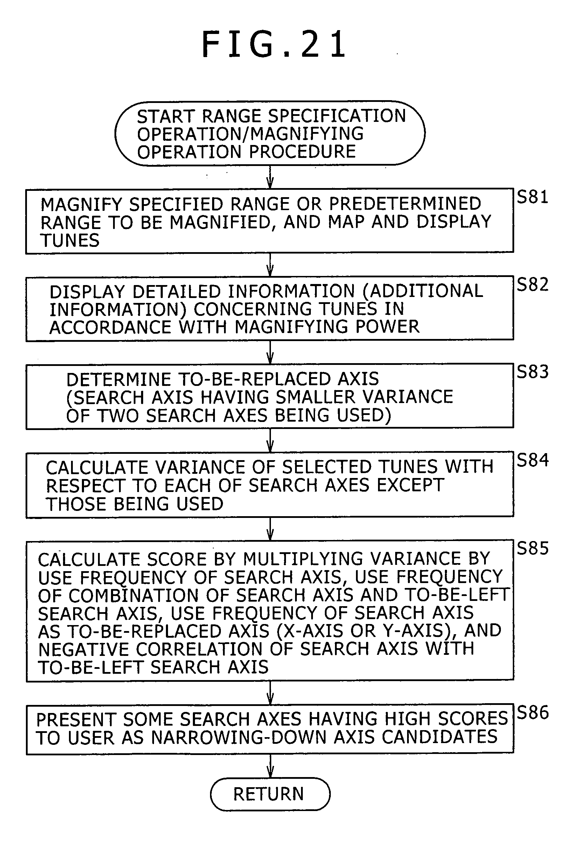

An information processing method according to one embodiment of the present invention is an information processing method (e.g., a method corresponding to a search operation procedure as shown in FIG. 17) employed by an information processing apparatus that presents, to a user who performs a search among a plurality of contents distributed over a search space formed using N (N is an integer greater than one) types of search axes, assistant information for assisting the user with the search. The method includes the steps of: specifying a first range, the first range being a part or whole of the search space (e.g., "YES" at step S9 in FIG. 17); presenting a state of distribution of contents within the first range specified in the specifying (e.g., step S81 in a range specification operation/magnifying operation procedure as illustrated in FIG. 21, which is performed at step S10 in FIG. 17), and, when, with respect to K (K is an integer equal to or less than N) types of search axes among the N types of search axes, another type of search axis has been specified by the user as a narrowing-down axis (e.g., "YES" at step S5 in FIG. 17), presenting the state of the distribution of the contents within a second range, the second range corresponding to the first range except that the K types of search axes are replaced with the narrowing-down axis or axes (e.g., the narrowing-down axis selecting operation procedure as illustrated in FIG. 19, which is performed at step S6 in FIG. 17); and selecting, from among different types of search axes from the N types of search axes used to form the first range, K or more types of search axes as a narrowing-down axis candidate according to a predetermined selection rule, and presenting the narrowing-down axis candidate or candidates to the user (e.g., steps S83 to S86 in the range specification operation/magnifying operation procedure as illustrated in FIG. 21, which is performed at step S10 in FIG. 17).

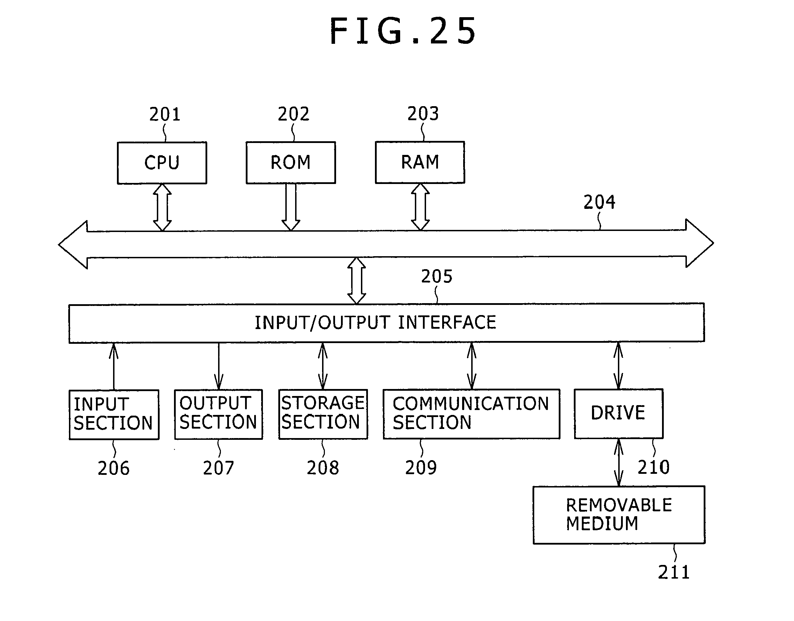

A program according to one embodiment of the present invention is a program corresponding to the above-described information processing method according to one embodiment of the present invention, and is executed by a computer as shown in FIG. 25, for example.

As described above, embodiments of the present invention handle contents. The term "content" as used herein refers to a wide variety of matters created by human creative activities. Examples of contents include films, music, dramas, literature, photographs, comics, animation, computer games, other types of written, graphic, color-based, audio, motion-based, and video matters, a combination of the above, and a program for providing information related to the above via a computer. Out of the above contents, contents that are mainly composed of music are referred to as "tunes" herein.

Note, however, that, in the present specification, so-called content data, i.e., a matter created by the human creative activity and converted by a device into a processible form, such as an electrical signal, or one fixed on memory, for example, will also be referred to as a content. In other words, audio data of a tune or the like will also be referred to simply as a content.

Embodiments of the present invention are applicable to a system for presenting a user interface (UI) to be used by a user for selecting a tune on the assumption that tunes are adopted as contents, for example. Hereinafter, such a system will be referred to as a "tune search system", and a tune search system will be described below as an information processing apparatus in accordance with one embodiment of the present invention. In other words, the term "tune search system" as used hereinafter, unless otherwise noted, refers to the tune search system as the information processing apparatus in accordance with one embodiment of the present invention. That is, the term "tune search system" will not refer to a known tune search system.

The tune search system can have a variety of functions as described below.

The tune search system has a function of classifying the tunes based on N search axes (N is an integer greater than 1). As such search axes, metadata added to each of the tunes is adopted, for example. Examples of the metadata include "Tempo", "Liveliness", and "Brightness". The search axes will be described later. This function allows the user to search for a tune using the N search axes (e.g., "Tempo", "Liveliness", "Brightness", etc.).

That is, the tune search system has a function of constructing an N-dimensional space (hereinafter referred to as a "search space") with N arbitrary search axes for axes of each dimension, mapping each of the tunes onto this search space, and presenting the resulting search space to the user. While the search space can be presented in a variety of manners, it is assumed herein that the search space is presented to the user in such a manner that an image (hereinafter referred to as a "map") of the search space on which tunes are mapped so as to represent a distribution of the tunes is displayed on a given display apparatus.

In this case, the tune search system may have a function of allowing the user to perform an operation of selecting a tune or specifying a range using the map. Thus, the user is able to select the tune by such an operation.

Here, the search axes are references for presenting the contents in accordance with information related to the contents. For example, the search axes are used as coordinate axes of a space for determining a position (coordinate values) of each of the contents in accordance with the information related to the contents.

Here, the search axes may be used as coordinate axes in any coordinate system. Specifically, for example, the search axes are straight lines in a space in accordance with a Cartesian coordinate system or an oblique coordinate system, whereas in polar coordinate systems, such as a circular coordinate system, a cylindrical coordinate system, and a spherical coordinate system, or other coordinate systems, the search axes are straight lines or curves or are used as references for showing an angle. Note that the search axes need not be displayed.

In the present embodiment, for example, the metadata is adopted as the information related to the contents. Accordingly, the search axis in the present embodiment is a coordinate axis that treats values of the metadata, which is the reference for determining characteristics of the contents, as coordinates. By specifying a range of coordinates along the search axis, the user is able to search for a content whose metadata has a value within a corresponding range.

Examples of operations for specifying the range include an operation of the user directly specifying a specific range in the map, and an operation of issuing an instruction for magnified display after performing an operation of selecting a plurality of tunes. The tune search system may have a function of magnifying the range for which such an operation was performed.

The tune search system may also have a function of, when a range in the map has been magnified, displaying a magnifying power, displaying titles of the tunes depending on how densely the tunes are displayed, or displaying various other additional information, together with or independently of the map displayed in magnified form.

The tune search system may also have a function of, based on tunes found as a result of a search by the user, automatically determining K (K is an integer equal to or less than N) search axes (hereinafter referred to as "narrowing-down axes" as appropriate) that seem effective for narrowing down the search, and presenting the K narrowing-down axes to the user. More precisely, K or more candidates for the K narrowing-down axes (these candidates will be hereinafter referred to as "narrowing-down axis candidates") are first presented to the user, and then K narrowing-down axis candidates are selected by the user as the K narrowing-down axes.

The tune search system may also have a function of, when the user has performed an operation of selecting the K narrowing-down axes, constructing a new search space while replacing K axes out of the N axes in the former search space with the K narrowing-down axes, re-mapping currently-selected tunes (i.e., the tunes distributed in the former map) onto the new search space to create a new map, and displaying the new map.

The tune search system may also have a function of reproducing only choruses of the tunes distributed in the map (i.e., the currently-selected tunes) successively in order to allow the user to check the range selected in the map. The chorus refers to the most impressive part of a tune.

The tune search system may also have a function of, when the user has performed a reproducing operation, creating a playlist containing the currently-selected tunes (i.e., the tunes distributed in the map) and reproducing the tunes in the playlist in a normal manner.

By exercising the variety of functions as described above, the tune search system can have first to fifth features as described below, for example.

The first feature is that the tune search system is capable of magnifying the range selected by the user to display more detailed information compared to before magnification.

The second feature is that the tune search system is capable of automatically determining the search axis that is effective for narrowing down the search as the narrowing-down axis, and presenting the narrowing-down axis to the user. More precisely, as will be described later, the user finally determines (selects) the narrowing-down axis, while the tune search system presents several narrowing-down axis candidates to assist the user to determine the narrowing-down axis.

The third feature is that when determining the narrowing-down axis candidates, the tune search system uses a frequency of use by the user of each of the search axes.

The fourth feature is that when determining the narrowing-down axis candidates, the tune search system uses the variance or entropy of values of the currently-selected tunes with respect to each of the search axes.

The fifth feature is that the tune search system is capable of reproducing the choruses of the currently-selected tunes successively during a selecting operation in order to allow the user to check the currently-selected tunes.

Hereinafter, the tune search system having the above features will be described in more detail with reference to the accompanying drawings.

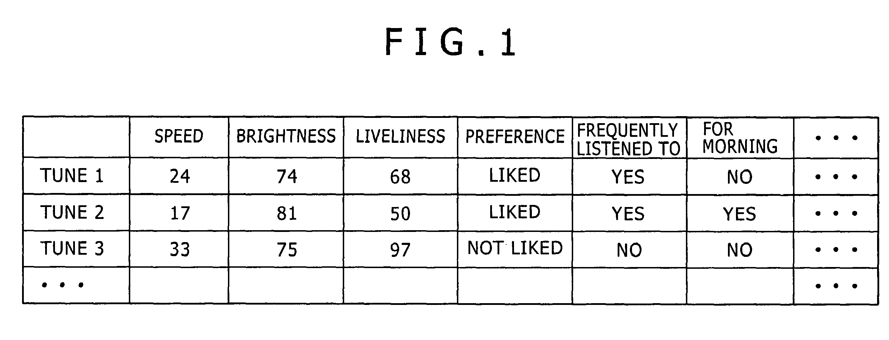

FIG. 1 shows examples of the search axes. As shown in FIG. 1, various types of characteristic information concerning the tunes (such information will be hereinafter referred to as "metadata" as appropriate) are added to the tunes (in FIG. 1, only tunes 1 to 3 are shown). Examples of the metadata include "Speed", "Brightness", "Liveliness", "Preference", "Frequently Listened to", and "For Morning". These various types of the metadata can be adopted as types of the search axis candidates.

In this case, the tune search system selects, from such various types of search axis candidates, N types of search axis candidates as the search axes, and mapping the tunes onto a search space constructed using the selected N types of search axes to create a map. Specifically, with respect to each tune, the tune search system performs a process of determining a value of metadata corresponding to a predetermined search axis to be a coordinate value in that predetermined search axis, and placing the tune at the determined coordinate, so that the map in which the tunes are distributed is created.

The value of the metadata determined to be the coordinate value in the predetermined search axis may be either the value of the metadata itself or a value obtained by modifying (e.g., normalizing) the value of the metadata. In the case where the metadata is not expressed in numerical form, a numerical value obtained by converting the metadata according to a predetermined rule may be used as the coordinate value in the predetermined search axis.

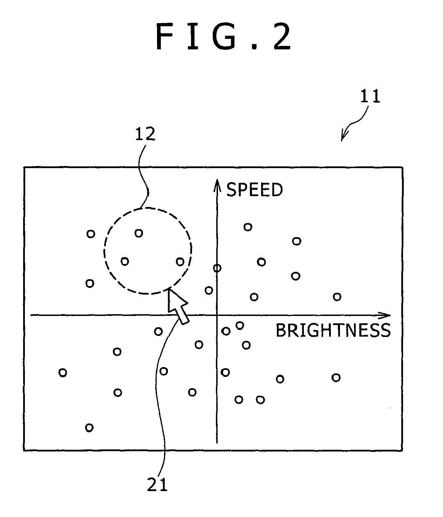

FIG. 2 shows an exemplary map 11 obtained as a result of mapping the tunes onto a search space constructed using a search axis "Brightness" (an x-axis) and a search axis "Speed" (a y-axis).

In the map 11 as shown in FIG. 2, each gray circle represents one tune. Needless to say, a symbol used to represent the tune in the map is not limited to the circle. To facilitate the description, it is assumed that the tune is represented by the circle.

By performing an operation of selecting a circle (tune) mapped to coordinate values showing a desired characteristic, for example, the user is able to select a tune corresponding to that circle.

Any type of operation is applicable as the operation of selecting the circle as long as it can be adopted by an operation device used by the user.

In the case where a so-called touch pen is adopted as the operation device, for example, the user can select the circle (tune) mapped to the coordinate values showing the desired characteristic with a tip of the touch pen, thereby selecting the tune corresponding to that circle.

In order to facilitate the understanding of the present embodiment, it is assumed that an operation of selecting the circle using a cursor 21 is adopted as shown in FIG. 2.

In this case also, any type of operation is applicable as an operation for moving the cursor 21 or a selecting operation as long as it can be adopted by the operation device used by the user.

In the case where a cross key is adopted as the operation device, for example, an operation of pressing the cross key may be adopted as the operation for moving the cursor 21, and an operation of pressing a selection key may be adopted as the selecting operation. In this case, each time the user presses the cross key, the cursor 21 moves from one circle (tune) to another. Then, the user can perform the operation of pressing the selection key when the cursor 21 has been moved to a position of a desired circle (tune) to select a tune corresponding to that circle.

In the case where a so-called mouse is adopted as the operation device, for example, an operation of moving the mouse can be adopted as the operation for moving the cursor 21, and a clicking operation can be adopted as the selecting operation. In this case, the user can move the cursor 21 to the position of the desired circle (tune) by moving the mouse on a desk or the like, and perform the clicking operation to select the tune corresponding to that circle.

Here, the "coordinate values showing the desired characteristic" will now be described below.

In the example of FIG. 2, the tunes are classified into four types of characteristics, "fast and bright tunes", "fast and dark tunes", "slow and dark tunes", and "slow and bright tunes". In order to facilitate the description, it is assumed here that a boundary between "fast" and "slow" is at the average of values of "Speed" of all tunes, while a boundary between "bright" and "dark" is at the average of values of "Brightness" of all tunes.

In this case, in the exemplary map as shown in FIG. 2, "fast and bright tunes" are mapped in a first quadrant (i.e., an upper right one of the four areas divided by the x-axis and the y-axis). Similarly, "fast and dark tunes" are mapped in a second quadrant (i.e., an upper left one of the four areas divided by the x-axis and the y-axis), "slow and dark tunes" are mapped in a third quadrant (i.e., a lower left one of the four areas divided by the x-axis and the y-axis), and "slow and bright tunes" are mapped in a fourth quadrant (a lower right one of the four areas divided by the x-axis and the y-axis).

Therefore, when the user desires to select a "fast and dark tune", for example, the "coordinate values showing the desired characteristic" will be coordinate values in the second quadrant. That is, since tunes classified as "fast and dark tunes" are mapped within the second quadrant (and represented by their corresponding circles), the user performs an operation of selecting a desired one of the circles within the second quadrant using the cursor 21 to select a tune corresponding to that circle. The degree of speed varies among "fast tunes", and the degree of speed of each "fast tune" corresponds to the coordinate value thereof. Therefore, when the user desires to select a "faster tune", the user should select a tune that has a greater absolute value of the coordinate value of the y-axis, i.e., a circle that is located at a higher position in FIG. 2.

It should be noted that the number of tunes mapped in FIG. 2 has been reduced to facilitate the understanding of the present embodiment. Thus, the circles (tunes) being displayed do not overlap one another, and selection of one circle (tune) using the cursor 21 is easy.

However, recent storage devices have significantly large storage capacity and are capable of storing an immense number of tunes. Although not shown in the accompanying drawings, when all tunes stored in such a storage device are mapped, a plurality of circles (tunes) having similar characteristics will be displayed so as to overlap each other, making it very difficult to select one circle (tune) using the cursor 21.

Considering such a case, as noted previously, the tune search system provides, to the user, the UI for allowing the user to perform the operation of specifying a specific range in the map or the operation of issuing the instruction for magnified display after performing the operation of selecting a plurality of tunes. In other words, the user is allowed to perform not only the operation of selecting one tune (circle) but also the operation of selecting a plurality of tunes (circles) within a specific range at the same time (including a magnifying operation for specifying a predetermined range to be magnified). Hereinafter, such an operation will be referred to as a "range specification operation", and a range specified by the range specification operation (including a predetermined range to be magnified as a result of the magnifying operation) will be referred to as a "specified range". When a plurality of tunes (circles) included in the specified range are being selected at the same time, these tunes will be referred to as "currently-selected tunes" as appropriate.

Specifically, in the example of FIG. 2, for example, the user can select a plurality of tunes (circles) classified as "fast and dark tunes" at the same time by, as the range specification operation, specifying a range 12 as the specified range using the cursor 21.

Any type of operation is applicable as the range specification operation. In the case where the mouse is used, for example, the user may move the mouse on the desk or the like so as to draw a rectangle, an ellipse, a free-form curve, or the like to display on the map a range (in the shape of the rectangle, the ellipse, the free-form curve, or the like) corresponding to a locus of the mouse, and perform the clicking operation when specifying this range as the specified range. Such an operation is applicable as the range specification operation, for example.

When the range specification operation has been performed in such a manner, the tune search system magnifies the specified range. Specifically, since the range 12 is specified as the specified range in the example of FIG. 2, for example, a map 11-2 that shows the range 12 in magnified form is displayed in place of a map 11-1 that includes the range 12 at a part of the second quadrant, as illustrated in FIG. 3.

In the map 11-2, "Artist Name". and "Tune Title" are displayed close to each tune (circle) as additional information concerning the tune. In this case, by watching the map 11-2, the user is able to easily obtain more detailed information about the currently-selected tunes, i.e., the plurality of tunes (circles) classified as the "fast and dark tunes", than by watching the map 11-1 before magnification.

Note that "Artist Name" and "Tune Title" are simply examples of the additional information concerning the tune. Although not shown in the figure, when the map has been magnified, the tune search system is capable of displaying, as the additional information concerning each tune, an appropriate number of appropriate pieces of information depending on the density of the tunes (circles) displayed.

Also note that, in the map 11-2 in magnified form as shown in FIG. 3, the x-axis (i.e., the search axis "Brightness" in this example) and the y-axis (i.e., the search axis "Speed" in this example) intersect with each other at a center of the selected range 12, for the sake of convenience. However, the position at which the x-axis and the y-axis intersect with each other is not limited to the center of the selected range. The x-axis and the y-axis may intersect with each other at any position.

Thus, the user becomes able to select a desired tune (circle) from the map 11-2 in which the range 12 specified as the specified range is shown in magnified form. However, the user need not select the desired tune (circle) from the map 11-2 immediately, but before selecting the desired tune (circle), the user may narrow down candidates for the tune to be selected.

In this case, the user may narrow down the candidates for the tune to be selected, by specifying, as the specified range, a new range smaller than the range 12. In other words, the user may narrow down the candidates for the tune to be selected, by reducing the number of tunes.

Alternatively, without changing the number of tunes, i.e., while keeping the currently-selected tunes, the user may perform a new search from a different viewpoint. That is, the user may perform a new search among the currently-selected tunes based on a different characteristic to narrow down the candidates for the tune to be selected finally.

Such a search can be achieved by presenting to the user a new map with at least one of the search axes changed, for example. In this case, for the convenience of the user, the tune search system is capable of automatically determining one or more search axes that seem effective for narrowing down the search, i.e., the narrowing-down axis candidates as mentioned previously, and automatically presenting a list 13 of the one or more narrowing-down axis candidates together with or independently of the map 11-2, as illustrated in FIG. 4, for example.

Note that the term "automatically" as used above should be interpreted as meaning that the tune search system performs the process based on its own autonomous judgment without the need for an explicit instruction (operation) by the user. Also note that, although three narrowing-down axis candidates are presented in the example of FIG. 4, the number of narrowing-down axis candidates presented is not limited to three.

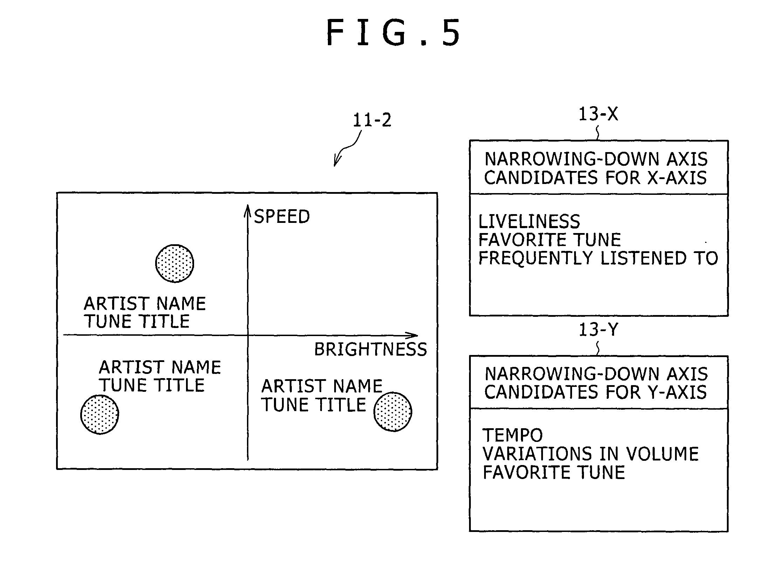

Further, the tune search system is also capable of determining one or more narrowing-down axis candidates for the x-axis and one or more narrowing-down axis candidates for the y-axis independently, and automatically presenting a list 13-X of the one or more narrowing-down axis candidates determined for the x-axis and a list 13-Y of the one or more narrowing-down axis candidates determined for the y-axis independently, together with or independently of the map 11-2, as illustrated in FIG. 5, for example.

Still further, the tune search system is also capable of determining one or more combinations of a narrowing-down axis candidate for the x-axis and a narrowing-down axis candidate for the y-axis, and automatically presenting a list 13-XY of the one or more combinations of the narrowing-down axis candidate for the x-axis and the narrowing-down axis candidate for the y-axis together with or independently of the map 11-2, as illustrated in FIG. 6, for example.

Note that the narrowing-down axis candidate(s) may be determined in any manner. Any method that a designer decides to be convenient for the user may be adopted as a method for determining the narrowing-down axis candidate(s), for example. Some examples of such methods will now be described below with reference to FIGS. 7 to 13.

For example, the tune search system may calculate, as an index for determining the narrowing-down axis candidate(s), a variance S of the currently-selected tunes with respect to each of all search axes other than the search axes already used. The variance S is calculated in accordance with the following equation (1).

[Equation 1]

$$s^2 = \frac{\sum_{i=1}^{n}(\bar{x}-x_i)^2}{n-1} \qquad \cdots (1)$$

n: the number of currently-selected tunes

$x_i$: the value of each of the currently-selected tunes with respect to the search axis

$\bar{x}$ : the average of the values of the currently-selected tunes with respect to the search axis

Here, the term "search axes already used" refers to the search axes already used as the x-axis and the y-axis in the map for showing the currently-selected tunes. In the example of FIGS. 3 to 6 described above, for example, the "search axes already used" refers to the search axes "Brightness" and "Speed".

FIG. 7 shows examples of the variance S of the currently-selected tunes calculated with respect to all search axes other than the search axes already used.

In the case where metadata corresponding to a specific search axis among all search axes other than the search axes already used does not take continuous values, the tune search system may calculate, as an index for determining the narrowing-down axis candidate(s), an entropy H(X) when the currently-selected tunes are classified according to the specific search axis, instead of the variance S, for example. The entropy H(X) is calculated in accordance with the following equation (2).

[Equation 2]

$$H(x) = - \sum_{x \in X} P(x) \log P(x) \qquad \cdots (2)$$

P(x): a probability that the value of each of the currently-selected tunes with respect to the search axis is x

Note that the case where the metadata corresponding to the specific search axis does not take continuous values refers to the case where the metadata takes discrete values. Examples of such cases include: the case where the metadata takes two values such as "Yes" and "No", as is the case with examples of metadata "Frequently Listened to" and "For Morning" as shown in FIG. 1; the case where the metadata takes two values such as "Liked" and "Not liked", as is the case with an example of metadata "Preference" as shown in FIG. 1; and the case where the metadata takes three values such as "Yes", "No", and "Neither", although not shown in the accompanying drawings.

Note that the term "variance S" as used hereinafter may sometimes mean the entropy H(X) depending on the type of the metadata adopted as the search axis.

Further, the tune search system may remember a search axis that the user frequently uses for search, and calculate, as an index for determining the narrowing-down axis candidate(s), the frequency of use of the search axis based on the remembrance, for example. Hereinafter, the term "use frequency" will be used to refer to the frequency of use, as appropriate.

Any method may be adopted as a method for calculating the use frequency. For example, each time a search is performed using specific search axes as a result of a user operation, the tune search system may increase the value of the use frequency of each of the specific search axes by one. Further, the tune search system may perform a process of decreasing the value of the use frequency of a search axis that has not been used for search for longer than a predetermined period of time, for example.

FIG. 8 shows examples of the use frequency of each of the search axes for which the variance S is calculated as shown in FIG. 7.

Still further, in order to present to the user the list of the combinations of the narrowing-down axis candidate for the x-axis and the narrowing-down axis candidate for the y-axis (see the list 13-XY in FIG. 6, for example), the tune search system may remember a combination of two search axes that the user frequency uses as the x-axis and the y-axis for search, and calculate, as an index for determining the narrowing-down axis candidates, the use frequency of that combination based on the remembrance. Note that the combination of the search axes may include one of the search axes already used. This is because a combination of one of the search axes already used, which is to be used as one of the x-axis and the y-axis, and one of the search axes other than the search axes already used, which is to be used as the other of the x-axis and the y-axis, can be a candidate for presentation to the user.

Any method may be adopted as a method for calculating the use frequency of the combination. For example, the above-described method for calculating the use frequency can also be adopted as the method for calculating the use frequency of the combination.

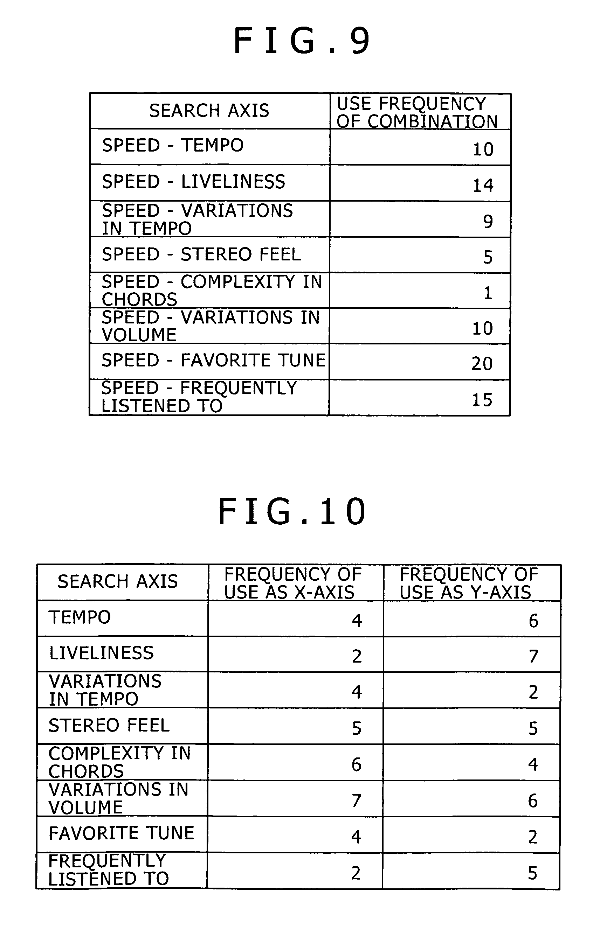

FIG. 9 shows use frequencies of combinations of the search axis "Speed", which is one of the search axes already used, and other search axes, as a part of examples of use frequencies of combinations of two search axes for which the variance S is calculated as shown in FIG. 7.

Still further, in order to present to the user the list of the narrowing-down axis candidates for the x-axis (see the list 13-X in FIG. 5, for example) and the list of the narrowing-down axis candidates for the y-axis (see the list 13-Y in FIG. 5, for example) independently, the tune search system may independently remember search axes that the user frequently uses as the x-axis and the y-axis, respectively, for search, and may calculate, as indexes for determining the narrowing-down axis candidates for the x-axis and the y-axis, respectively, the frequency of use of those search axes as the x-axis and the y-axis, respectively, based on the remembrance.

Any method may be adopted as a method for calculating the frequency of use as the x-axis. For example, the above-described method for calculating the use frequency can also be adopted as the method for calculating the frequency of use as the x-axis. Similarly, any method may be adopted as a method for calculating the frequency of use as the y-axis. For example, the above-described method for calculating the use frequency can also be adopted as the method for calculating the frequency of use as the y-axis.

FIG. 10 shows examples of the frequency of use as the x-axis and the frequency of use as the y-axis concerning the search axes for which the variance S is calculated as shown in FIG. 7.

Still further, the tune search system may calculate, as an index for determining the narrowing-down axis candidate(s), a negative correlation iCorrel between the value of a "to-be-left search axis" and the value of each of all search axes other than the search axes already used. The term "to-be-left search axis" as used herein refers to the remaining one of the search axes used as the x-axis and the y-axis in the map being displayed (e.g., the map 11-2 as shown in FIGS. 3 to 6 described above) when one of the search axes is replaced with the narrowing-down axis. Hereinafter, the other search axis than the to-be-left search axis, i.e., the search axis to be replaced with the narrowing-down axis, will be referred to as a "to-be-replaced axis".

The negative correlation iCorrel is calculated in accordance with the following equation (3).

[Equation 3]

$$iCorrel = 1.0 - Abs(Pearson(x1, x2)) \qquad \cdots (3)$$

iCorrel: negative correlation to be calculated
Abs(X): absolute value of X
Pearson(x1, x2): Pearson correlation coefficient between vectors x1 and x2

Specifically, the tune search system expresses a characteristic amount of a search axis that can be chosen as the narrowing-down axis candidate and a characteristic amount of the to-be-left search axis as vectors x1 and x2, respectively, and substitutes these vectors x1 and x2 into the equation (3) to calculate the negative correlation iCorrel.

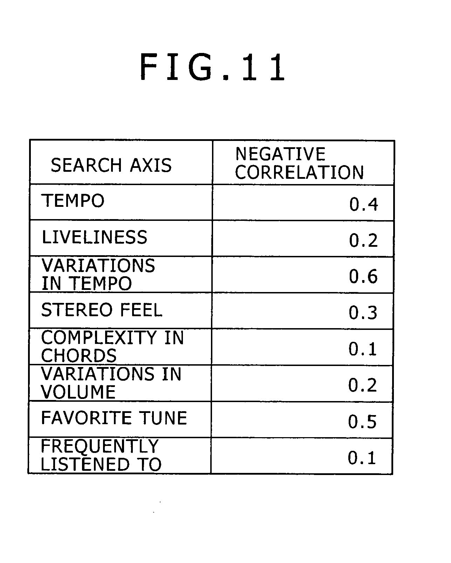

FIG. 11 shows examples of the negative correlation iCorrel between the to-be-left search axis and each of the search axes for which the variance S is calculated as shown in FIG. 7. It is assumed in the example of FIG. 11 that the to-be-left search axis is the x-axis used in the map 11-2 as shown in FIGS. 3 to 6 described above, i.e., the search axis "Brightness".

As described above, the tune search system can calculate, as the indexes for determining the narrowing-down axis candidate(s), the variance S, the entropy H(X), the various types of use frequencies, the negative correlation iCorrel, and so on with respect to each search axis. It will be appreciated that the variance S, the entropy H(X), the various types of use frequencies, the negative correlation iCorrel, and so on are simply examples of the indexes for determining the narrowing-down axis candidate(s), and that there are various other types of indexes that can be adopted.

Next, the tune search system uses one or more of the above various types of indexes to calculate a score of each search axis. Then, the tune search system determines one or more narrowing-down axis candidates from among the search axes according to a predetermined rule using the scores, and presents the one or more narrowing-down axis candidates to the user.

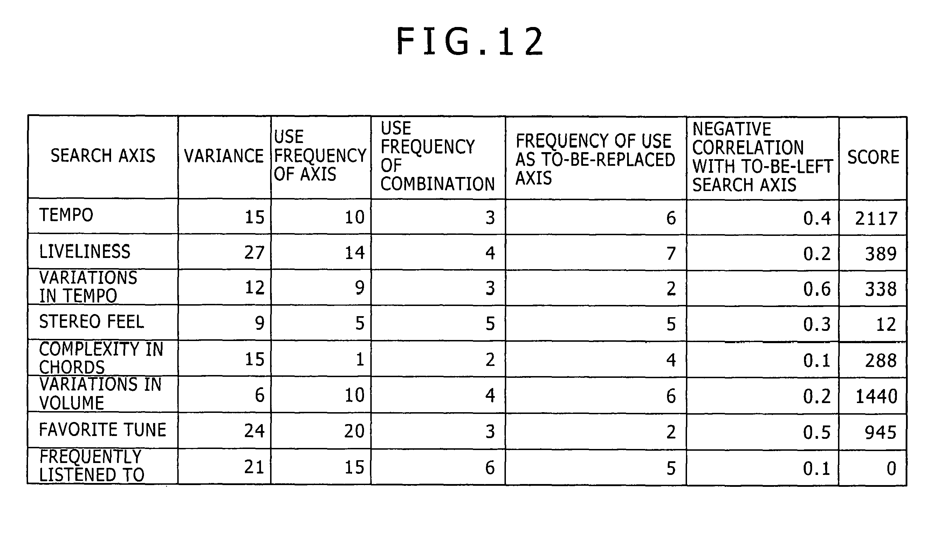

Specifically, for example, examples of the scores calculated using the variances S (which may include the entropies H(X) as appropriate), the use frequencies, and the negative correlations iCorrel as described above with reference to FIGS. 7 to 11 are shown in FIG. 12.

In FIG. 12, values in a column "Variance" correspond to the values as shown in FIG. 7, and values in a column "Use Frequency of Axis" correspond to the values as shown in FIG. 8.

As shown in FIG. 14 described later, FIG. 12 shows an example in the case where the to-be-left search axis is the x-axis used in the map 11-2 as shown in FIGS. 3 to 6 described above, i.e., the search axis "Brightness". In other words, FIG. 12 shows an example in the case where the to-be-replaced axis is the y-axis, i.e., the search axis "Speed". Accordingly, values in a column "Use Frequency of Combination" in FIG. 12 do not correspond to the values as shown in FIG. 9, but are values of use frequencies of combinations of the search axis "Brightness", which is the to-be-left search axis, and each of the other search axes.

Further, generally speaking, "Frequency of Use as To-be-replaced Axis" may be either "Frequency of Use as X-axis" or "Frequency of use as Y-axis". "Frequency of Use as To-be-replaced Axis" is "Frequency of Use as X-axis" when the to-be-replaced axis is the x-axis, while it is "Frequency of Use as Y-axis" when the to-be-replaced axis is the y-axis. In the example of FIG. 12, the to-be-replaced axis is the y-axis as noted previously, and therefore, values in a column "Frequency of Use as To-be-replaced Axis" correspond to the values of "Frequency of Use as Y-axis" as shown in FIG. 10.

Still further, in FIG. 12, values in a column "Negative Correlation with To-be-left Search Axis" correspond to the values of "Negative Correlation" as shown in FIG. 11. This is because, as noted previously, FIG. 11 also shows an example in the case where the to-be-left search axis is the search axis "Brightness".

It is assumed here that the predetermined rule for determining the narrowing-down axis candidate(s) is a rule that, of all the search axes, top three search axes that have the highest scores are determined to be the narrowing-down axis candidates.

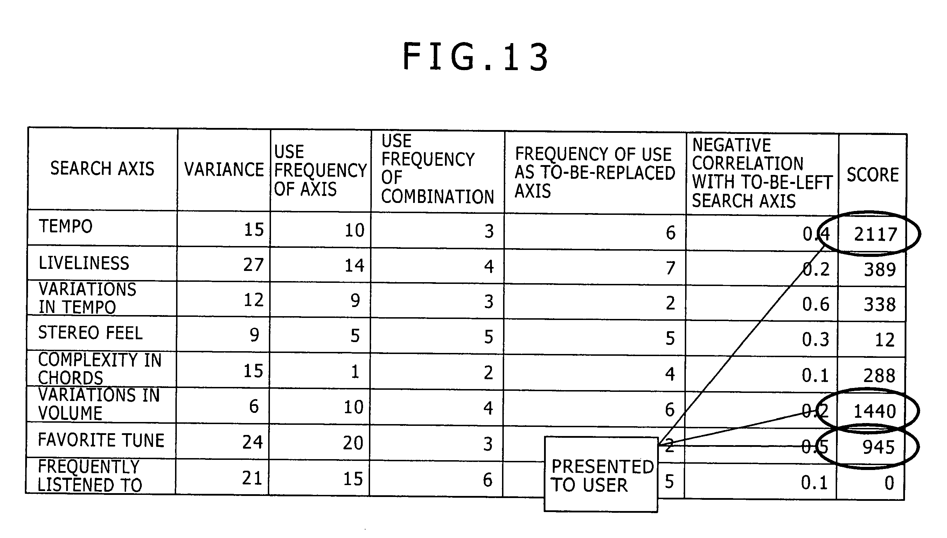

In this case, as shown in FIG. 13, the search axis "Tempo", which has the highest score (2117), a search axis "Variations in Volume", which has the second highest score (1440), and a search axis "Favorite Tune", which has the third highest score (945), are determined to be the narrowing-down axis candidates. Then, as shown in FIG. 4 described above, for example, the list 13 of these narrowing-down axis candidates is automatically presented to the user together with or independently of the map 11-2.

Note that the rule for determining the narrowing-down axis candidate(s) is not limited to the rule as described above with reference to FIGS. 12 and 13, and that any other rule that involves use of the scores may be adopted. For example, a rule that a search axis or axes whose score is equal to or greater than a threshold are determined to be the narrowing-down axis candidate(s) may be adopted.

Also note that it has been assumed in the above-described example that the to-be-replaced axis, i.e., the search axis that is currently displayed but is to be replaced with the narrowing-down axis, is the y-axis. Needless to say, however, the to-be-replaced axis may be the x-axis. Any method may be adopted as a method for determining the to-be-replaced axis. For example, the following method may be adopted. That is, a method of determining a search axis that has the lower variance S of the two search axes currently displayed as the x-axis and the y-axis to be the to-be-replaced axis may be adopted.

In the case where the list 13 of the narrowing-down axis candidate(s) for the single specific to-be-replaced axis is presented as in the example of FIG. 4 described above, the tune search system may use only the values of "Variance", "Use Frequency of Axis", and "Negative Correlation with To-be-left Search Axis", out of the various types of indexes listed in FIG. 12, to calculate the score of each search axis, and determine the narrowing-down axis candidates.

Meanwhile, in the case where the list 13-X of the narrowing-down axis candidate(s) for the x-axis and the list 13-Y of the narrowing-down axis candidate(s) for the y-axis are presented independently as in the example of FIG. 5 described above, the tune search system need determine the narrowing-down axis candidate(s) for the x-axis and the narrowing-down axis candidate(s) for the y-axis independently. Therefore, in this case, the score of each search axis is calculated using the value of each of "Variance" through "Negative Correlation with To-be-left Search Axis" listed in FIG. 12.

Meanwhile, in the case where the list 13-XY of the combination(s) of the narrowing-down axis candidate for the x-axis and the narrowing-down axis candidate for the y-axis is presented as in the example of FIG. 6 described above, the tune search system need calculate the scores concerning all combinations (pairs) of search axes.

As noted previously, the indexes used when calculating necessary scores for determining the narrowing-down axis candidate(s) are not limited to those mentioned above. However, use of the above indexes is preferable. Some reasons for this preference will now be described below.

For example, when the variance S or the entropy H(X) is used as the index when calculating the score, a search axis that disperses the currently-selected tunes more widely will be presented to the user as the narrowing-down axis candidate.

For example, when any of the various types of use frequencies is used as the index when calculating the score, presentation to the user of a search axis that the user normally does not use frequently (or an unintelligible search axis) will be prevented.

For example, when the use frequency of the combination is used when calculating the score, a combination of characteristics that the user thinks convenient for constructing a two-dimensional map will be presented as a combination of a narrowing-down axis candidate for the x-axis and a narrowing-down axis candidate for the y-axis.

For example, when the frequency of use as the to-be-replaced axis, i.e., the "frequency of use as the x-axis" or the "frequency of use as the y-axis", is used when calculating the score, a search axis that the user wishes to use as the x-axis or a search axis that the user wishes to use as the y-axis will be presented to the user as the narrowing-down axis candidate. In other words, this contributes to preventing a search axis that the user feels unsuitable for use as the x-axis from being presented to the user as the narrowing-down axis candidate for the x-axis, for example.

For example, when the negative correlation iCorrel with the to-be-left search axis is used when calculating the score, a search axis that has a high correlation with the to-be-left search axis will be prevented from being presented to the user as the narrowing-down axis candidate. This is useful considering the fact that if the map 11 displayed is constructed with two search axes having a high correlation with each other for the x-axis and the y-axis, the tunes (circles) will be arranged in a row, making it meaningless for the tunes (circles) to be displayed on a two-dimensional plane.

As described above, when the user has performed the range specification operation (see FIG. 2 described above, for example), the tune search system magnifies the specified range (see FIG. 3 described above, for example). Besides, the tune search system creates the list of the one or more narrowing-down axis candidates and presents the list to the user together with or independently of the image of the specified range in magnified form (see FIGS. 4 to 6 described above, for example). Hereinafter, such a series of processes performed by the tune search system will be referred to as a "range specification operation/magnifying operation procedure".

Then, the user is able to perform an operation of selecting, from the one or more narrowing-down axis candidates included in the list, a desired one of the narrowing-down axis candidates as the narrowing-down axis to instruct the tune search system to replace the to-be-replaced axis (i.e., the x-axis or the y-axis) in the map with the narrowing-down axis. Hereinafter, this operation will be referred to as a "narrowing-down axis selecting operation".

Specifically, for example, it is assumed here that the map 11-2 and the list 13 of the narrowing-down axis candidates are being displayed together as shown in FIG. 4 described above.

In this case, since the UI that involves the use of the cursor 21 is adopted in the present embodiment, the user, as the narrowing-down axis selecting operation, is able to specify, from among the narrowing-down axis candidates included in the list 13, i.e., "Tempo", "Variations in Volume", and "Favorite Tune", one desired narrowing-down axis candidate using the cursor 21, thereby selecting the desired narrowing-down axis candidate as the narrowing-down axis.

In the example of FIG. 14, for example, since "Favorite Tune" is specified by the cursor 21 as shown in the middle of the figure, the search axis "Favorite Tune" is selected as the narrowing-down axis. In this case, the tune search system reconstructs the search space while leaving the search axis "Brightness" (i.e., the to-be-left search axis as described above) as the x-axis and changing the y-axis from the search axis "Speed" to the search axis "Favorite Tune". Then, the tune search system re-maps the tunes (circles) distributed over the map 11-2 being displayed onto the reconstructed search space to create a map 11-3 as shown on the right-hand side of FIG. 14, and presents the map 11-3 to the user. That is, from the viewpoint of the user, the map 11-2 is updated to the map 11-3 on a display screen. Hereinafter, such a series of processes performed by the tune search system will be referred to as a "narrowing-down axis selecting operation procedure".

Although not shown in the accompanying drawings, it is convenient if the user can arbitrarily select, also from among the search axes other than those presented by the tune search system as the narrowing-down axis candidates, a search axis that is to be used as a replacement (hereinafter, the search axis selected in such a manner will be referred to as a "replacement search axis"). As such, the tune search system is configured to allow the user to perform an operation of specifying the replacement search axis. Hereinafter, such an operation will be referred to as a "search axis replacing operation" in order to distinguish such an operation from the narrowing-down axis selecting operation.

A procedure performed by the tune search system when the user has performed the search axis replacing operation is basically the same as the narrowing-down axis selecting operation procedure. That is, the tune search system re-constructs the search space while replacing the search axis used as one of the x-axis and the y-axis that has been specified as the to-be-replaced axis (note that both of the x-axis and the y-axis can be specified as the to-be-replaced axes) with the replacement search axis and leaving the other search axis being displayed (i.e., the to-be-left search axis) as the other axis. Then, the tune search system re-maps the tunes (circles) distributed over the map being displayed onto the reconstructed search space to re-create the map, and presents the re-created map to the user. Hereinafter, such a series of processes performed by the tune search system will be referred to as a "search axis replacing operation procedure" in order to distinguish such a series of processes from the narrowing-down axis selecting operation procedure.

Further, when the user has performed a predetermined operation after the range specification operation, for example, the tune search system may reproduce the choruses of the currently-selected tunes successively to allow the user to check contents of the selected tunes. Hereinafter, such a procedure performed by the tune search system will be referred to as a "tune selecting operation procedure", and the predetermined operation for instructing the tune search system to perform the tune selecting operation procedure will be referred to as a "tune selecting operation".

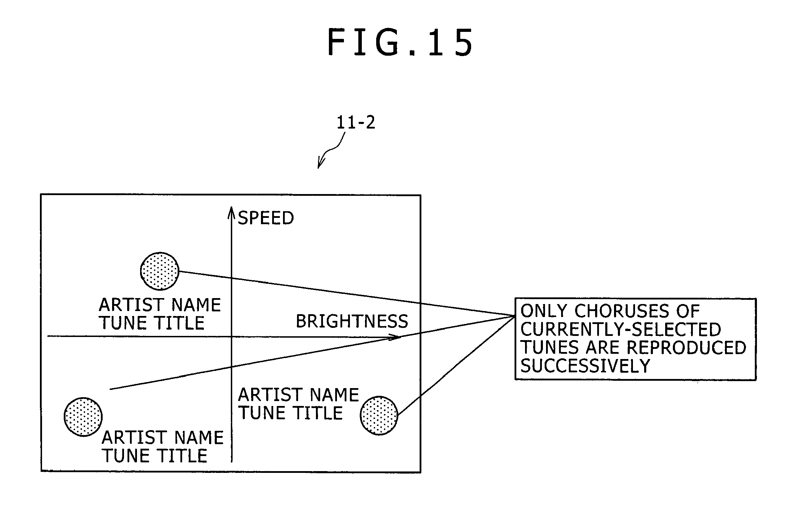

Specifically, suppose, for example, that the user has performed the tune selecting operation when the map 11-2 as shown in FIG. 3 described above is being displayed as a result of the range specification operation. In this case, in the tune selecting operation procedure, the three tunes (i.e., the three circles) being displayed on the map 11-2 are recognized as the currently-selected tunes, and only the choruses of the three tunes are reproduced successively, as shown in FIG. 15.

It will be appreciated that the tune selecting operation need not be performed immediately after the range specification operation, and that the tune selecting operation may be performed after the narrowing-down axis selecting operation or the search axis replacing operation as described above is performed. In this case, as a result of the narrowing-down axis selecting operation procedure or the search axis replacing operation procedure, a map is displayed in which at least one of the search axes used as the x-axis and the y-axis is replaced with the narrowing-down axis or the replacement search axis. That is, the map is updated in the display screen. However, since the updating of the map being displayed and the reproducing of the choruses can be independent processes, the recognition of the tunes (circles) being displayed on the map as the currently-selected tunes and the successive reproducing of only the choruses of the currently-selected tunes can be performed in the same manner regardless of the updating of the map being displayed.

Still further, when the user has performed a predetermined reproducing operation after the range specification operation, for example, the tune search system adds the currently-selected tunes to the playlist, and reproduces the tunes in accordance with the playlist. Hereinafter, such a procedure performed by the tune search system will be referred to as a "reproducing operation procedure".

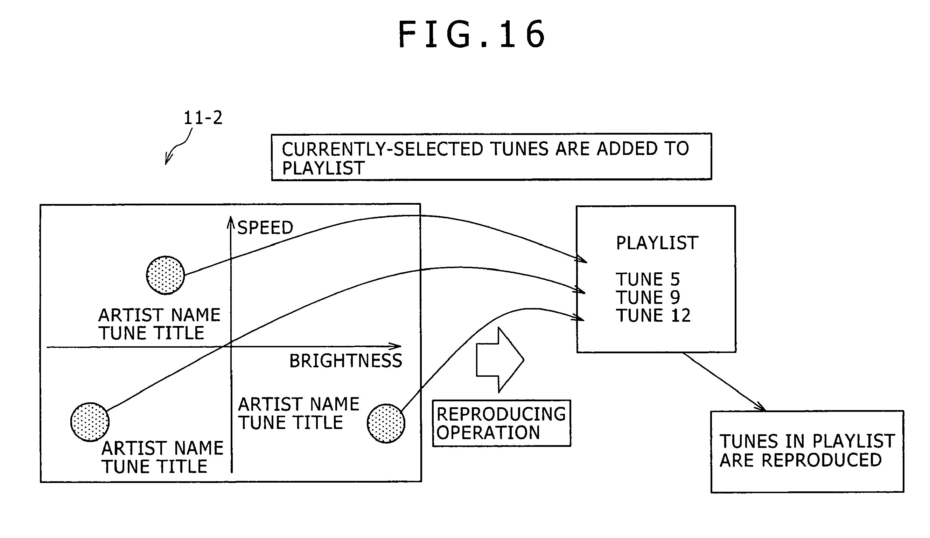

Specifically, suppose, for example, that the user has performed the reproducing operation when the map 11-2 as shown in FIG. 3 described above is being displayed as a result of the range specification operation. In this case, in the reproducing operation procedure, the three tunes (i.e., the three circles) being displayed on the map 11-2 are recognized as the currently-selected tunes and added to the playlist as shown in FIG. 16. Specifically, in the example of FIG. 16, tune 5, tune 9, and tune 12 are added to the playlist. Then, the tunes in this playlist are reproduced.

It will be appreciated that the reproducing operation need not be performed immediately after the range specification operation, and that the reproducing operation may be performed after the narrowing-down axis selecting operation or the search axis replacing operation as described above is performed. In this case, as a result of the narrowing-down axis selecting operation procedure or the search axis replacing operation procedure, a map is displayed in which at least one of the search axes used as the x-axis and the y-axis is replaced with the narrowing-down axis or the replacement search axis. That is, the map is updated in the display screen. However, since the updating of the map being displayed and the reproducing of the tunes in the playlist can be independent processes, the recognition of the tunes (circles) being displayed on the map as the currently-selected tunes, the addition of these tunes to the playlist, and the reproducing of these tunes can be performed in the same manner regardless of the updating of the map being displayed.

Similarly, the reproducing of the choruses and the reproducing of the tunes in the playlist can be independent processes. Accordingly, regardless of whether the successive reproducing of the choruses is being performed by the tune selecting operation procedure, the reproducing operation will initiate the reproducing operation procedure, so that the tunes are reproduced in accordance with the playlist.

The procedures (hereinafter referred to collectively as a "search operation procedure") performed by the tune search system and described above with reference to FIGS. 1 to 16 can be expressed as a flowchart as shown in FIG. 17, for example. That is, FIG. 17 is a flowchart illustrating an exemplary search operation procedure in accordance with one embodiment of the present invention.

At step S1, the tune search system maps and displays the tunes using two search axes having the highest use frequencies.

Here, the above expression "using two search axes having the highest use frequencies" means to use, as the x-axis and the y-axis in the search space, two search axes having the highest use frequencies among the plurality of search axis candidates corresponding to the plurality of types of metadata of the tunes. The use frequency used at this time may be either the frequency of use as the x-axis or the y-axis without the x-axis and the y-axis being distinguished from each other, or the frequency of use as the respective one of the x-axis and the y-axis while the x-axis and the y-axis are distinguished from each other. The former type of use frequency corresponds to the example of FIG. 8 described above, while the latter type of use frequency corresponds to the frequency of use as the x-axis or the y-axis as shown in FIG. 10 described above, for example. Alternatively, a combination of two search axes that has the highest use frequency may be selected based on the use frequency of combination as shown in FIG. 9, and the two search axes in the combination may be adopted as the two search axes having the highest use frequencies.

In other words, the above expression "to map and display the tunes using two search axes having the highest use frequencies" is a simplified expression meaning to perform the following series of processes. That is, the tune search system selects, from among the various search axis candidates, the two search axes having the highest use frequencies, and constructs the search space using these two search axes as the x-axis and the y-axis. Then, the tune search system creates the map by mapping the tunes onto the search space. Then, the tune search system displays this map. To perform the above series of processes is expressed by the expression "to map and display the tunes using two search axes having the highest use frequencies".

Note that, in the following descriptions of the various procedures, the expression "to map and display the tunes" will be used as appropriate to avoid redundancy.

After the map, which forms an initial screen in the search operation procedure, is displayed as a result of the process of step S1, control proceeds to step S2.

At step S2, the tune search system determines whether the user has performed any operation.

Until the user performs any operation, the determination at the process of step S2 continues to be "NO", so that the determination process of step S2 is performed again. This looping process is repeated until the user performs any operation.

When the user has performed some operation, the determination at the process of step S2 becomes "YES", and control proceeds to step S3.

At step S3, the tune search system determines whether the operated performed by the user is the search axis replacing operation.

If it is determined at step S3 that the operation performed by the user is the search axis replacing operation, the tune search system performs the above-described search axis replacing operation procedure at step S4. Then, control returns to step S2. Details of an example of the search axis replacing operation procedure will be described later with reference to FIG. 18.

Meanwhile, if it is determined at step S3 that the operation performed by the user is not the search axis replacing operation, control proceeds to step S5.

At step S5, the tune search system determines whether the operation performed by the user is the narrowing-down axis selecting operation.

If it is determined at step S5 that the operation performed by the user is the narrowing-down axis selecting operation, the tune search system performs the narrowing-down axis selecting operation procedure as described above with reference to FIG. 14 at step S6. Then, control returns to step S2. Details of an example of the narrowing-down axis selecting operation procedure will be described later with reference to FIG. 19.

Meanwhile, if it is determined at step S5 that the operation performed by the user is not the narrowing-down axis selecting operation, control proceeds to step S7.

At step S7, the tune search system determines whether the operation performed by the user is the tune selecting operation.

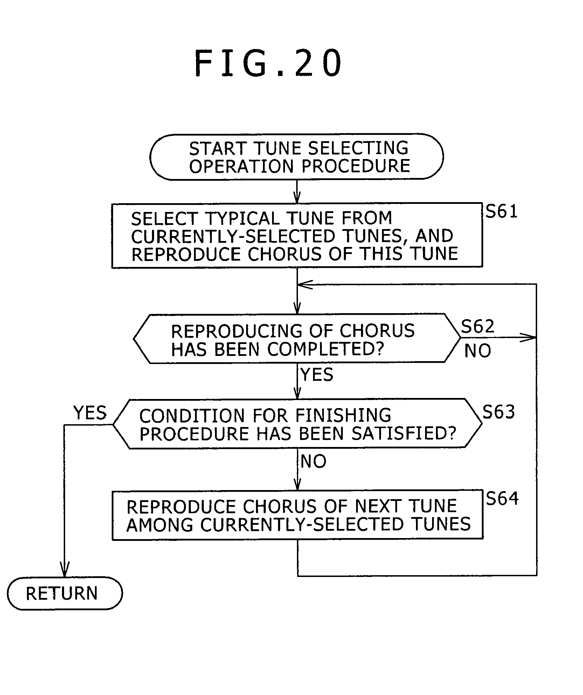

If it is determined at step S7 that the operation performed by the user is the tune selecting operation, the tune search system performs the tune selecting operation procedure as described above with reference to FIG. 15 at step S8. Then, control returns to step S2. Details of an example of the tune selecting operation procedure will be described later with reference to FIG. 20.

Meanwhile, if it is determined at step S7 that the operation performed by the user is not the tune selecting operation, control proceeds to step S9.

At step S9, the tune search system determines whether the operation performed by the user is the range specification operation.

If it is determined at step S9 that the operation performed by the user is the range specification operation, the tune search system performs the range specification operation/magnifying operation procedure as described above with reference to FIGS. 2 to 13 at step S10. Then, control returns to step S2. Details of an example of the range specification operation/magnifying operation procedure will be described later with reference to FIG. 21.

Meanwhile, if it is determined at step S9 that the operation performed by the user is not the range specification operation, control proceeds to step S11.

At step S11, the tune search system determines whether the operation performed by the user is the reproducing operation.

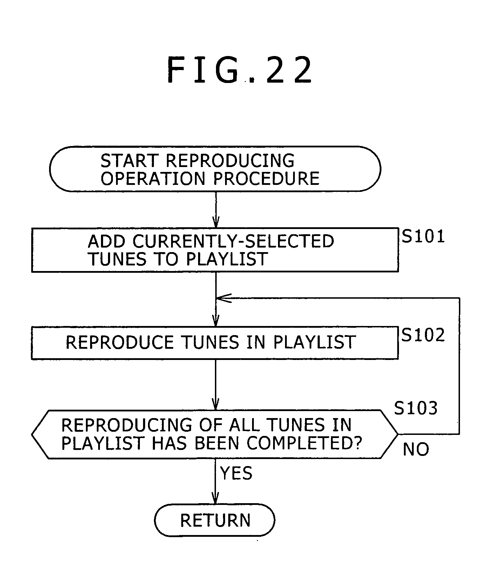

If it is determined at step S11 that the operation performed by the user is the reproducing operation, the tune search system performs the reproducing operation procedure as described above with reference to FIG. 16 at step S12. Then, the whole of the search operation procedure is finished. Details of an example of the reproducing operation procedure will be described later with reference to FIG. 22.

Meanwhile, if it is determined at step S11 that the operation performed by the user is not the reproducing operation, the whole of the search operation procedure is finished.

Hereinafter, referring to FIGS. 18 to 22, the details of the examples of the various operation procedures in the search operation procedure of FIG. 17 will be described individually.

FIG. 18 is a flowchart illustrating the details of the example of the search axis replacing operation procedure performed at step S4 in FIG. 17.

At step S21, the tune search system replaces at least one of the two axes (i.e., the two axes used as the x-axis and the y-axis) used in the search space with the replacement search axis specified by the user.

At step S22, the tune search system maps and displays the tunes using the two search axes after the replacement.

At step S23, the tune search system updates the use frequency of the replacement search axis.

Thus, the search axis replacing operation procedure at step S4 in FIG. 17 is completed, and then control returns to step S2.

FIG. 19 is a flowchart illustrating the details of the example of the narrowing-down axis selecting operation procedure performed at step S6 in FIG. 17.

At step S41, the tune search system replaces at least one of the two axes (i.e., the two search axes used as the x-axis and the y-axis) used in the search space with the narrowing-down axis selected by the user.

At step S42, the tune search system maps and displays the tunes using the two search axes after the replacement. For specific examples of screens displayed, see the maps 11-2 and 11-3 before and after the replacement as shown in FIG. 14 described above.

At step S43, the tune search system updates the use frequency of the narrowing-down axis (i.e., the search axis selected as such).

Thus, the narrowing-down axis selecting operation procedure at step S6 in FIG. 17 is completed, and then control returns to step S2.

FIG. 20 is a flowchart illustrating the details of the example of the tune selecting operation procedure performed at step S8 in FIG. 17.

At step S61, the tune search system selects a typical tune from the currently-selected tunes, and reproduces a chorus of this tune.

Note that any method may be adopted as a method for selecting the typical tune. In order to facilitate the description, it is assumed here that the three tunes (circles) being displayed on the map 11-2 as shown in FIG. 15 described above are the currently-selected tunes, and that the choruses of the tunes are reproduced in this order: the first, second, third, and fourth quadrants. In this case, the tune (circle) being displayed in the second quadrant is selected as the typical tune, and the chorus of this tune is reproduced.

At step S62, the tune search system determines whether the reproducing of the chorus has been completed.

That is, until the reproducing of the chorus is completed, the determination at the process of step S62 continues to be "NO", so that the determination process of step S62 is performed again. This looping process is repeated until the reproducing of the chorus is completed.

When the reproducing of the chorus is completed thereafter, the determination at the process of step S62 becomes "YES", and control proceeds to step S63. In the example as described above, for example, when the chorus of the tune (circle) being displayed in the second quadrant has been completed, the determination at the process of step S62 becomes "YES", and control proceeds to step S63.

At step S63, the tune search system determines whether a condition for finishing this procedure has been satisfied.

Any condition may be adopted as the condition for finishing this procedure. For example, it is assumed here that completion of the reproducing of the choruses of all the currently-selected tunes is adopted as the condition for finishing this procedure. In the example as described above, for example, since the choruses of the two tunes (circles) being displayed in the third and fourth quadrants, respectively, have not been reproduced, the determination at the process of step S63 is "NO", and control proceeds to step S64.

At step S64, the tune search system reproduces the chorus of the next tune among the currently-selected tunes. In the example as described above, for example, the chorus of the tune (circle) being displayed in the third quadrant is reproduced next.

Then, control returns to step S62, and the subsequent processes are repeated. In the example as described above, for example, the determination process of step S62 is performed repeatedly while the chorus of the tune (circle) being displayed in the third quadrant is being reproduced, and when the reproducing of the chorus of this tune has been completed, the determination at the process of step S62 becomes "YES", and control proceeds to step S63. At this time, the determination at the process of step S63 is "NO", and at step S64, the chorus of the tune (circle) being displayed in the fourth quadrant is reproduced next.

Then, control returns to step S62 again, and the determination process of step S62 is performed repeatedly while the chorus of the tune (circle) being displayed in the fourth quadrant is being reproduced, and when the reproducing of the chorus of this tune has been completed, the determination at the process of step S62 becomes "YES", and control proceeds to step S63. At this time, since the condition for finishing this procedure, i.e., the completion of the choruses of all the currently-selected tunes, is satisfied, the determination at the process of step S63 is "YES", and the tune selecting operation procedure is finished. That is, the process of step S8 in FIG. 17 is completed, and control returns to step S2.

FIG. 21 is a flowchart illustrating the details of the example of the range specification operation/magnifying operation procedure performed at step S10 in FIG. 17.

At step S81, the tune search system magnifies the specified range or the predetermined range to be magnified, and maps and displays the tunes. Specifically, in the case where the range 12 has been specified as the specified range when the map 11-1 as shown in FIG. 3 described above is being displayed, for example, the map 11-2, which represents the range 12 in magnified form, is displayed.

At step S82, the tune search system displays detailed information (additional information) concerning the tunes in accordance with the magnifying power. For example, as in the map 11-2 as shown in FIG. 4 described above, the additional information such as the artist name and the tune title of each tune is displayed close to the tune (circle).

At step S83, the tune search system determines the to-be-replaced axis. Here, as described above, the search axis having the smaller variance S of the two search axes being used is determined to be the to-be-replaced axis, for example. Specifically, in the example of FIG. 14 described above, for example, the search axis "Speed", i.e., the y-axis, is determined to be the to-be-replaced axis.

At step S84, the tune search system calculates the variance S of the selected tunes with respect to each of the search axes except those being used. The variance S is calculated in accordance with the equation (1) mentioned above. This process of step S84 may include the process of calculating the entropy H(X) in accordance with the equation (2) mentioned above. In the example as described above with reference to FIGS. 2 to 14, the search axes except those being used refer to the search axes other than "Speed" and "Brightness".

At step S85, the tune search system calculates the score of each of the search axes except those being used, by multiplying the variance S of the search axis by the use frequency of the search axis, the use frequency of the combination of the search axis and the to-be-left search axis, the use frequency of the search axis as the to-be-replaced axis (i.e., either the x-axis or the y-axis; in the example as described above with reference to FIGS. 2 to 14, the y-axis), and the negative correlation iCorrel of the search axis with the to-be-left search axis.

Note that, as noted previously, the method for calculating the score at step S85 is not limited to the calculation method as described in FIG. 21.

At step S86, the tune search system presents some search axes having high scores to the user as the narrowing-down axis candidates.

Specifically, in the case where the scores as shown in FIGS. 12 and 13 described above have been calculated in the process of step S85, for example, in the process of step S86, the list 13 in which "Tempo", which has the highest score (2117), "Variations in Volume", which has the second highest score (1440), and "Favorite Tune", which has the third highest score (945), are arranged as the narrowing-down axis candidates is automatically presented to the user, as shown in FIGS. 4 and 14.

Note that, as noted previously, the method for determining the narrowing-down axis candidates at step S86 is not limited to the determination method as described in FIG. 21.

Thus, the range specification operation/magnifying operation procedure at step S10 in FIG. 17 is completed, and control returns to step S2.

FIG. 22 is a flowchart illustrating the details of the example of the reproducing operation procedure performed at step S12 in FIG. 17.

At step S101, the tune search system adds the currently-selected tunes to the playlist.

In order to facilitate the description, it is assumed here that the three tunes (circles) being displayed on the map 11-2 as shown in FIG. 16 described above are the currently-selected tunes, and that the tune (circle) being displayed in the second quadrant is tune 5, the tune (circle) being displayed in the third quadrant is tune 9, and the tune (circle) being displayed in the fourth quadrant is tune 12. In this case, as shown in FIG. 16, the playlist indicating that tune 5, tune 9, and tune 12 are reproduced in this order is generated.

At step S102, the tune search system reproduces the tunes in the playlist. In the example as described above, for example, reproducing of tune 5 is started first, and thereafter tune 9 and tune 12 will be sequentially reproduced successively.

Meanwhile, at step S103, the tune search system determines whether the reproducing of all the tunes in the playlist has been completed.

That is, until the reproducing of all the tunes in the playlist is completed, the determination at the process of step S103 continues to be "NO", so that control returns to step S102 and the process of step S102 is performed again. This looping process is repeated until the reproducing of all the tunes in the playlist is completed. In the example as described above, for example, this looping process is repeated until the reproducing of the last tune, tune 12, is completed.

When the reproducing of all the tunes in the playlist is completed (in the example as described above, for example, when the reproducing of the last tune, tune 12, is completed) thereafter, the determination at the process of step S103 becomes "YES", and the reproducing operation procedure is finished. That is, the process of step S12 in FIG. 17 is completed, and the whole of the search operation procedure is completed as well.

The tune search system capable of performing the search operation procedure described above with reference to FIGS. 17 to 22 may have a structure as shown in FIG. 23, for example. That is, FIG. 23 is a functional block diagram illustrating an exemplary functional structure of the tune search system.

Note that the functional block diagram as shown in FIG. 23 shows, out of various functional blocks that can be contained in the tune search system, only functional blocks for achieving a function to which an embodiment of the present invention is applied, i.e., a function of performing the above-described search operation procedure. That is, the function of performing the search operation procedure is divided into several specific functions, and only functional blocks each of which has a separate one of the specific functions are shown in FIG. 23. In other words, the other functions possessed by the tune search system are not illustrated in FIG. 23.

Note that each of the functional blocks as shown in FIG. 23 may be implemented in either hardware alone or software alone, or in a combination of both of them. Also note that two or more of the functional blocks may be integrated into a single functional block, and that any one of the functional blocks may be further divided into sub-functional blocks. In other words, the tune search system as shown in FIG. 23 may be embodied in any of various possible forms, as long as it has all the functions achieved by the functional blocks as shown in FIG. 23.

Also note that, in the present specification, the term "system" refers to the whole of an apparatus, circuitry, or the like formed of a plurality of parts such as devices, circuits, and so on. That is, the tune search system as shown in FIG. 23 may be formed by either a single apparatus or multiple apparatuses.

In FIG. 23, the tune search system includes an operation section 101 through a tune DB 111.

The operation section 101 accepts the above-described various operations by the user, i.e., the search axis replacing operation (see step S3 in FIG. 17), the narrowing-down axis selecting operation (see step S5), the tune selecting operation (see step S7), the range specification operation (see step S9), the reproducing operation (see step S11), and so on, and notifies the map presentation section 105 of the accepted operation.

The display section 102 displays an image of various types of assistant information, such as the map, for assisting the user with tune search in order to present the assistant information to the user.

The metadata DB 103 stores the metadata of each tune. That is, the various types of metadata corresponding to the respective search axes are stored in the metadata DB 103 on a tune-by-tune basis.

The search axis use frequency holding section 104 holds the use frequency of each search axis.

As the process of step S1 in FIG. 17, the map presentation section 105 recognizes the two search axes having the highest use frequencies based on the data held in the search axis use frequency holding section 104, and constructs the search space using these two search axes as the x-axis and the y-axis. The map presentation section 105 creates the map by mapping the tunes onto the search space based on the data stored in the metadata DB 103. Then, the map presentation section 105 allows the display section 102 to display the map, thereby presenting the map to the user.

If the user thereafter performs the search axis replacing operation (see step S3 in FIG. 17), for example, the map presentation section 105 performs the search axis replacing operation procedure (see step S4 in FIG. 17 and the flowchart of FIG. 18). That is, the map presentation section 105 allows the display section 102 to display the map in which the search axis used as the x-axis or the y-axis is replaced with the search axis (i.e., the replacement search axis) specified by the user, thereby presenting this map to the user. In addition, the map presentation section 105 updates the use frequency of the replacement search axis as held in the search axis use frequency holding section 104.

If the user performs the range specification operation (see step S9 in FIG. 17), the map presentation section 105 controls performance of the range specification operation/magnifying operation procedure (see step S10 in FIG. 17 and the flowchart of FIG. 21).

For example, the map presentation section 105 notifies the narrowing-down axis presentation section 106 and the chorus reproducing section 107 of the currently-selected tunes (i.e., the tunes mapped within the specified range). In addition, the map presentation section 105 allows the display section 102 to display the map representing the specified range in magnified form, and allowing the display section 102 to display more pieces of detailed information (i.e., the additional information) concerning the tunes in accordance with the magnifying power, thereby presenting the magnified map and the various types of additional information to the user. In other words, the map presentation section 105 performs the processes of steps S81 and S82 in FIG. 21. Note that the processes of steps S83 to S86 are performed by the narrowing-down axis presentation section 106 as described below.

If the user performs the reproducing operation (see step S11 in FIG. 17), the map presentation section 105 notifies the playlist generation section 108 of the currently-selected tunes (i.e., the tunes mapped within the specified range). As a result, the process of step S12 in FIG. 17, i.e., the reproducing operation procedure as illustrated in FIG. 22, is performed by the playlist generation section 108 and the tune reproducing section 110 as described below.

If the user performs the narrowing-down axis selecting operation (see step S5 in FIG. 17), the map presentation section 105 performs the narrowing-down axis selecting operation procedure (see step S6 in FIG. 17 and the flowchart of FIG. 19). That is, the map presentation section 105 allows the display section 102 to display the map in which the to-be-replaced axis is replaced with the narrowing-down axis specified by the user, thereby presenting this map to the user. In addition, the map presentation section 105 updates the use frequency of the narrowing-down axis as held in the search axis use frequency holding section 104.

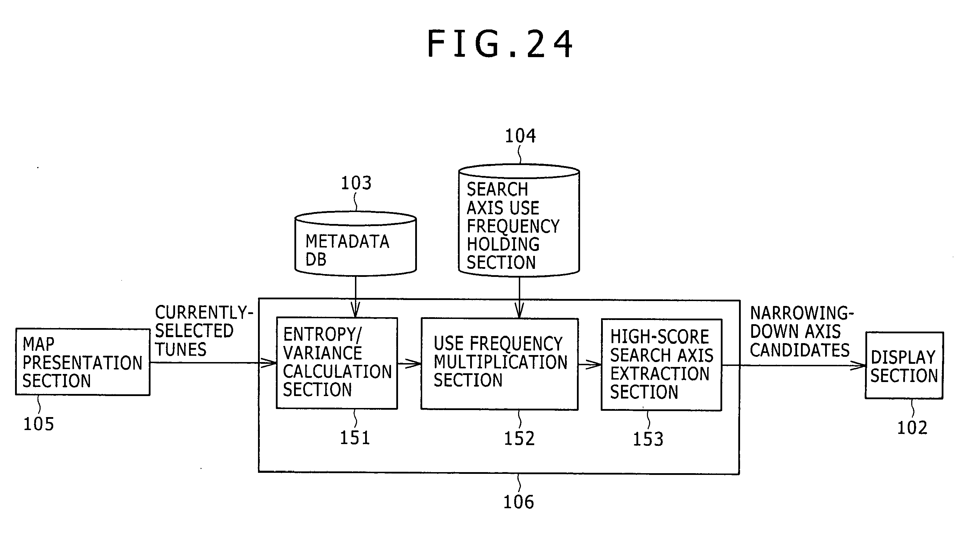

Note that the to-be-replaced axis is determined as a result of an entropy/variance calculation section 151 as shown in FIG. 24 described below performing the process of step S83 in FIG. 21.

As described above, the narrowing-down axis presentation section 106 performs the processes of steps S83 to S86 in the range specification operation/magnifying operation procedure as illustrated in FIG. 21.

For this purpose, the narrowing-down axis presentation section 106 includes the entropy/variance calculation section 151, a use frequency multiplication section 152, and a high-score search axis extraction section 153, as shown in FIG. 24, for example.

The entropy/variance calculation section 151 performs the process of step S83. Specifically, based on the data stored in the metadata DB 103, the entropy/variance calculation section 151 calculates the variance S of the currently-selected tunes of which the narrowing-down axis presentation section 106 has been notified by the map presentation section 105, with respect to each of the two search axes used as the x-axis and the y-axis, respectively. Note that, instead of the variance S, the entropy H(X) may be calculated at this time as appropriate depending on the type of the metadata corresponding to the search axis. Then, the entropy/variance calculation section 151 determines the search axis having the smaller variance S of the two search axes to be the to-be-replaced axis.

In addition, the entropy/variance calculation section 151 performs the process of step S84. Specifically, based on the data stored in the metadata DB 103, the entropy/variance calculation section 151 calculates the variance S of the currently-selected tunes with respect to each of the search axes except those being used. Note that, instead of the variance S, the entropy H(X) may be calculated at this time as appropriate depending on the type of the metadata corresponding to the search axis.

The use frequency multiplication section 152 performs the process of step S85. Specifically, the use frequency multiplication section 152 calculates the score of each of the search axes except those being used, by multiplying the variance S of the search axis by the use frequency of the search axis, the use frequency of the combination of the search axis and the to-be-left search axis, the frequency of use of the search axis as the to-be-replaced axis, and the negative correlation iCorrel of the search axis with the to-be-left search axis. Note that the data held in the search axis use frequency holding section 104 is referred to for the various types of use frequencies.

The high-score search axis extraction section 153 performs the process of step S86. Specifically, the high-score search axis extraction section 153 determines some search axes having high scores to be the narrowing-down axis candidates, and allows the display section 102 to display the list of these narrowing-down axis candidates, thereby presenting the narrowing-down axis candidates to the user.

Returning to FIG. 23, when notified by the map presentation section 105 of the currently-selected tunes, the chorus reproducing section 107 reproduces the choruses of the currently-selected tunes successively. In other words, the chorus reproducing section 107 performs the tune selecting operation procedure (see the flowchart of FIG. 20) at step S8 in FIG. 17.

When notified by the map presentation section 105 of the currently-selected tunes, the playlist generation section 108 generates the playlist including the currently-selected tunes, and allows the playlist holding section 109 to hold the generated playlist. The tune reproducing section 110 reproduces each of the tunes in accordance with the playlist held in the playlist holding section 109. The tunes (i.e., the data of the tunes) to be reproduced are stored in the tune DB 111. That is, the tune reproducing section 110 performs the reproducing operation procedure (see the flowchart of FIG. 22) at step S12 in FIG. 17.

The tune search system, which is the information processing apparatus in accordance with one embodiment of the present invention, has been described above with reference to FIGS. 1 to 24.

Application of the above-described tune search system enables the displaying of the detailed information concerning the currently-selected tunes and the successive reproducing of the choruses of the currently-selected tunes to be initiated by simple operations by the user, allowing the user to accurately grasp a range of the currently-selected tunes (e.g., what type of characteristics the currently-selected tunes have, taken in the aggregate).

Moreover, the user becomes able to select the narrowing-down axis easily when narrowing down the search. As a result, quick search for a desired tune becomes easier for the user.

Note that the above-described series of processes may be implemented in either hardware or software. In the case where the series of processes are implemented in software, a program that constitutes the software and which is stored in a program storage medium is installed into a computer having a dedicated hardware structure or, for example, a general-purpose personal computer that, when various programs are installed therein, becomes capable of performing various functions.

FIG. 25 is a block diagram illustrating an exemplary structure of a personal computer for performing at least a part of the above-described series of processes, i.e. the search operation procedure as illustrated in FIG. 17, for example, in accordance with the program. That is, the whole or part of the tune search system as illustrated in FIG. 23, e.g., some of the functional blocks as shown in FIG. 23, can be structured as shown in FIG. 25.

In FIG. 25, a central processing unit (CPU) 201 performs various processes in accordance with a program stored in a read only memory (ROM) 202 or a storage section 208. The program executed by the CPU 201, data, and so on are stored in a random access memory (RAM) 203 as appropriate. The CPU 201, the ROM 202, and the RAM 203 are connected to one another via a bus 204.

An input/output interface 205 is also connected to the CPU 201 via the bus 204. An input section 206 formed by a keyboard, a mouse, a microphone, or the like, and an output section 207 formed by a display, a loudspeaker, or the like are connected to the input/output interface 205. The CPU 201 performs the various processes in accordance with instructions inputted via the input section 206. Then, the CPU 201 outputs a result of such a process to the output section 207.

The storage section 208 connected to the input/output interface 205 is formed by a hard disk, for example. The storage section 208 stores the program executed by the CPU 201 and various types of data. A communication section 209 is used to communicate with an external device via a network such as the Internet or a local area network.

The program may be acquired via the communication section 209 and stored in the storage section 208.

When a removable medium 211, such as a magnetic disk, an optical disk, a magneto-optical disk, a semiconductor memory, etc., is mounted on a drive 210 connected to the input/output interface 205, the drive 210 drives the removable medium 211 to acquire a program or data recorded thereon. The acquired program or data is transferred to and stored in the storage section 208 as necessary.

The program storage medium that stores the program to be installed into the computer so as to be executable by the computer is, as illustrated in FIG. 25, constituted by the removable medium 211, the ROM 202 for temporary or permanent storage of the program, the hard disk that forms the storage section 208, or the like. The removable medium 211 is a packaged medium, and examples of the removable medium 211 include a magnetic disk (including a flexible disk), an optical disk (including a CD-ROM (Compact Disc-Read Only Memory) and a DVD (Digital Versatile Disc)), a magneto-optical disk, and a semiconductor memory. The storage of the program into such a program storage medium may be achieved as necessary via the communication section 209, which is an interface for a router, a modem, or the like, employing a wired or wireless communication medium such as the local area network, the Internet, or digital satellite broadcasting.

Note that the steps implemented by the program stored in the program storage medium and described in the present specification may naturally be performed chronologically in order of description but need not be performed chronologically. Some steps may be performed in parallel or independently of one another.

It should be understood by those skilled in the art that various modifications, combinations, subcombinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1. An information processing apparatus that presents, to a user who performs a search among a plurality of contents distributed over a search space formed using N, N is an integer greater than one, types of search axes, assistant information for assisting the user with the search, the apparatus comprising:

   specification means for specifying a first range, the first range being a part or whole of the search space;
   range presentation means for presenting a state of distribution of contents within the first range specified by said specification means, and, when, with respect to K, K is an integer equal to or less than N, types of search axes among the N types of search axes, another type of search axis has been specified by the user as a narrowing-down axis, presenting the state of the distribution of the contents within a second range, the second range corresponding to the first range except that the K types of search axes are replaced with the narrowing-down axis or axes; and
   narrowing-down axis presentation means for selecting, from among different types of search axes from the N types of search axes used to form the first range, K or more types of search axes as a narrowing-down axis candidate according to a predetermined selection rule, and presenting the narrowing-down axis candidate or candidates to the user.

2. The information processing apparatus according to claim 1, wherein
   said specification means further specifies, out of the narrowing-down axis candidates presented by said narrowing-down axis presentation means to the user, K types of narrowing-down axis candidates selected by the user as the K types of narrowing-down axes, and
   when the K types of narrowing-down axes have been specified by said specification means, said range presentation means presents the state of the distribution of the contents within the second range while replacing the K types of search axes among the N types of search axes with the K types of narrowing-down axes specified by said specification means.

3. The information processing apparatus according to claim 1, wherein the selection rule is a rule using a frequency of use by the user of each of the search axes selectable as the narrowing-down axis candidates.

4. The information processing apparatus according to claim 1, wherein the selection rule is a rule using a variance or entropy of the contents distributed over the first range with respect to each of the search axes selectable as the narrowing-down axis candidates.

5. The information processing apparatus according to claim 1, wherein said narrowing-down axis presentation means further selects one or more combinations of K types of search axes according to a predetermined selection rule, and presents the one or more combinations of K types of search axes to the user as candidates for the K types of narrowing-down axes.

6. An information processing method employed by an information processing apparatus that presents, to a user who performs a search among a plurality of contents distributed over a search space formed using N, N is an integer greater than one, types of search axes, assistant information for assisting the user with the search, the method comprising the steps of:

   specifying a first range, the first range being a part or whole of the search space;
   presenting a state of distribution of contents within the first range specified in said specifying, and, when, with respect to K, K is an integer equal to or less than N, types of search axes among the N types of search axes, another type of search axis has been specified by the user as a narrowing-down axis, presenting the state of the distribution of the contents within a second range, the second range corresponding to the first range except that the K types of search axes are replaced with the narrowing-down axis or axes; and
   selecting, from among different types of search axes from the N types of search axes used to form the first range, K or more types of search axes as a narrowing-down axis candidate according to a predetermined selection rule, and presenting the narrowing-down axis candidate or candidates to the user.

7. A program for causing a computer that controls a process of presenting, to a user who performs a search among a plurality of contents distributed over a search space formed using N (N is an integer greater than one) types of search axes, assistant information for assisting the user with the search to execute steps of:

   specifying a first range, the first range being a part or whole of the search space;
   presenting a state of distribution of contents within the first range specified in said specifying, and, when, with respect to K (K is an integer equal to or less than N) types of search axes among the N types of search axes, another type of search axis has been specified by the user as a narrowing-down axis, presenting the state of the distribution of the contents within a second range, the second range corresponding to the first range except that the K types of search axes are replaced with the narrowing-down axis or axes; and
   selecting, from among different types of search axes from the N types of search axes used to form the first range, K or more types of search axes as a narrowing-down axis candidate according to a predetermined selection rule, and presenting the narrowing-down axis candidate or candidates to the user.

8. An information processing apparatus that presents, to a user who performs a search among a plurality of contents distributed over a search space formed using N (N is an integer greater than one) types of search axes, assistant information for assisting the user with the search, the apparatus comprising:

   a specification unit configured to specify a first range, the first range being a part or whole of the search space;
   a range presentation unit configured to present a state of distribution of contents within the first range specified by said specification unit, and, when, with respect to K, K is an integer equal to or less than N, types of search axes among the N types of search axes, another type of search axis has been specified by the user as a narrowing-down axis, present the state of the distribution of the contents within a second range, the second range corresponding to the first range except that the K types of search axes are replaced with the narrowing-down axis or axes; and
   a narrowing-down axis presentation unit configured to select, from among different types of search axes from the N types of search axes used to form the first range, K or more types of search axes as a narrowing-down axis candidate according to a predetermined selection rule, and present the narrowing-down axis candidate or candidates to the user.

# FIG.1

| | SPEED | BRIGHTNESS | LIVELINESS | PREFERENCE | FREQUENTLY LISTENED TO | FOR MORNING | · · · |
|---|---|---|---|---|---|---|---|
| TUNE 1 | 24 | 74 | 68 | LIKED | YES | NO | · · · |
| TUNE 2 | 17 | 81 | 50 | LIKED | YES | YES | · · · |
| TUNE 3 | 33 | 75 | 97 | NOT LIKED | NO | NO | · · · |
| · · · | | | | | | | · · · |

EP 1 975 824 A1

# F I G . 2

# FIG.3

EP 1 975 824 A1

# F I G . 4

11-2

13

SPEED

ARTIST NAME
TUNE TITLE

BRIGHTNESS

ARTIST NAME
TUNE TITLE

ARTIST NAME
TUNE TITLE

TEMPO
VARIATIONS IN
VOLUME
FAVORITE TUNE

# FIG.5

11-2

SPEED

ARTIST NAME
TUNE TITLE

BRIGHTNESS

ARTIST NAME
TUNE TITLE

ARTIST NAME
TUNE TITLE

13-X

| NARROWING-DOWN AXIS CANDIDATES FOR X-AXIS |
|---|
| LIVELINESS<br>FAVORITE TUNE<br>FREQUENTLY LISTENED TO |

13-Y

| NARROWING-DOWN AXIS CANDIDATES FOR Y-AXIS |
|---|
| TEMPO<br>VARIATIONS IN VOLUME<br>FAVORITE TUNE |

EP 1 975 824 A1

# FIG.6

11-2

13-XY

| | | |
|---|---|---|
| X: LIVELINESS | Y:TEMPO | |
| X: FAVORITE TUNE | Y:VARIATIONS IN VOLUME | |
| X: FREQUENTLY LISTENED TO | Y:FAVORITE TUNE | |

SPEED

BRIGHTNESS

ARTIST NAME
TUNE TITLE

ARTIST NAME
TUNE TITLE

ARTIST NAME
TUNE TITLE

EP 1 975 824 A1

# FIG.7

| SEARCH AXIS | VARIANCE |
|---|---|
| TEMPO | 15 |
| LIVELINESS | 27 |
| VARIATIONS IN TEMPO | 12 |
| STEREO FEEL | 9 |
| COMPLEXITY IN CHORDS | 15 |
| VARIATIONS IN VOLUME | 6 |
| FAVORITE TUNE | 24 |
| FREQUENTLY LISTENED TO | 21 |

# FIG.8

| SEARCH AXIS | USE FREQUENCY |
|---|---|
| TEMPO | 10 |
| LIVELINESS | 14 |
| VARIATIONS IN TEMPO | 9 |
| STEREO FEEL | 5 |
| COMPLEXITY IN CHORDS | 1 |
| VARIATIONS IN VOLUME | 10 |
| FAVORITE TUNE | 20 |
| FREQUENTLY LISTENED TO | 15 |

# FIG.9

| SEARCH AXIS | USE FREQUENCY OF COMBINATION |
|---|---|
| SPEED - TEMPO | 10 |
| SPEED - LIVELINESS | 14 |
| SPEED - VARIATIONS IN TEMPO | 9 |
| SPEED - STEREO FEEL | 5 |
| SPEED - COMPLEXITY IN CHORDS | 1 |
| SPEED - VARIATIONS IN VOLUME | 10 |
| SPEED - FAVORITE TUNE | 20 |
| SPEED - FREQUENTLY LISTENED TO | 15 |

# FIG.10

| SEARCH AXIS | FREQUENCY OF USE AS X-AXIS | FREQUENCY OF USE AS Y-AXIS |
|---|---|---|
| TEMPO | 4 | 6 |
| LIVELINESS | 2 | 7 |
| VARIATIONS IN TEMPO | 4 | 2 |
| STEREO FEEL | 5 | 5 |
| COMPLEXITY IN CHORDS | 6 | 4 |
| VARIATIONS IN VOLUME | 7 | 6 |
| FAVORITE TUNE | 4 | 2 |
| FREQUENTLY LISTENED TO | 2 | 5 |

# FIG.11

| SEARCH AXIS | NEGATIVE CORRELATION |
|---|---|
| TEMPO | 0.4 |
| LIVELINESS | 0.2 |
| VARIATIONS IN TEMPO | 0.6 |
| STEREO FEEL | 0.3 |
| COMPLEXITY IN CHORDS | 0.1 |
| VARIATIONS IN VOLUME | 0.2 |
| FAVORITE TUNE | 0.5 |
| FREQUENTLY LISTENED TO | 0.1 |

# FIG.12

| SEARCH AXIS | VARIANCE | USE FREQUENCY OF AXIS | USE FREQUENCY OF COMBINATION | FREQUENCY OF USE AS TO-BE-REPLACED AXIS | NEGATIVE CORRELATION WITH TO-BE-LEFT SEARCH AXIS | SCORE |
|---|---|---|---|---|---|---|
| TEMPO | 15 | 10 | 3 | 6 | 0.4 | 2117 |
| LIVELINESS | 27 | 14 | 4 | 7 | 0.2 | 389 |
| VARIATIONS IN TEMPO | 12 | 9 | 3 | 2 | 0.6 | 338 |
| STEREO FEEL | 9 | 5 | 5 | 5 | 0.3 | 12 |
| COMPLEXITY IN CHORDS | 15 | 1 | 2 | 4 | 0.1 | 288 |
| VARIATIONS IN VOLUME | 6 | 10 | 4 | 6 | 0.2 | 1440 |
| FAVORITE TUNE | 24 | 20 | 3 | 2 | 0.5 | 945 |
| FREQUENTLY LISTENED TO | 21 | 15 | 6 | 5 | 0.1 | 0 |

EP 1 975 824 A1

# FIG.13

| SEARCH AXIS | VARIANCE | USE FREQUENCY OF AXIS | USE FREQUENCY OF COMBINATION | FREQUENCY OF USE AS TO-BE-REPLACED AXIS | NEGATIVE CORRELATION WITH TO-BE-LEFT SEARCH AXIS | SCORE |
|---|---|---|---|---|---|---|
| TEMPO | 15 | 10 | 3 | 6 | 0.4 | 2117 |
| LIVELINESS | 27 | 14 | 4 | 7 | 0.2 | 389 |
| VARIATIONS IN TEMPO | 12 | 9 | 3 | 2 | 0.6 | 338 |
| STEREO FEEL | 9 | 5 | 5 | 5 | 0.3 | 12 |
| COMPLEXITY IN CHORDS | 15 | 1 | 2 | 4 | 0.1 | 288 |
| VARIATIONS IN VOLUME | 6 | 10 | 4 | 6 | 0.2 | 1440 |
| FAVORITE TUNE | 24 | 20 | 3 | 2 | 0.5 | 945 |
| FREQUENTLY LISTENED TO | 21 | 15 | 6 | 5 | 0.1 | 0 |

PRESENTED TO USER

EP 1 975 824 A1

# FIG.14

EP 1 975 824 A1

# FIG.15

11-2

SPEED

ARTIST NAME
TUNE TITLE

BRIGHTNESS

ARTIST NAME
TUNE TITLE

ARTIST NAME
TUNE TITLE

ONLY CHORUSES OF
CURRENTLY-SELECTED
TUNES ARE REPRODUCED
SUCCESSIVELY

EP 1 975 824 A1

# FIG.16

34

11-2

CURRENTLY-SELECTED TUNES ARE ADDED TO PLAYLIST

SPEED

ARTIST NAME
TUNE TITLE

BRIGHTNESS

ARTIST NAME
TUNE TITLE

ARTIST NAME
TUNE TITLE

REPRODUCING
OPERATION

PLAYLIST

TUNE 5
TUNE 9
TUNE 12

TUNES IN PLAYLIST
ARE REPRODUCED

EP 1 975 824 A1

# FIG.17

START SEARCH
OPERATION PROCEDURE

MAP AND DISPLAY TUNES USING TWO SEARCH
AXES HAVING HIGHEST USE FREQUENCIES — S1

USER HAS PERFORMED ANY OPERATION? — S2 → NO

↓ YES

SEARCH AXIS REPLACING OPERATION? — S3
YES ↓     NO

SEARCH AXIS REPLACING
OPERATION PROCEDURE — S4

NARROWING-DOWN AXIS
SELECTING OPERATION? — S5
NO    YES

NARROWING-DOWN
AXIS SELECTING
OPERATION
PROCEDURE — S6

TUNE SELECTING OPERATION? — S7
YES ↓    NO

TUNE SELECTING
OPERATION PROCEDURE — S8

RANGE SPECIFICATION OPERATION? — S9
NO    YES

RANGE SPECIFICATION
OPERATION/MAGNIFYING
OPERATION PROCEDURE — S10

REPRODUCING OPERATION? — S11
NO     YES

REPRODUCING OPERATION PROCEDURE — S12

END

# FIG.18

```
( START SEARCH AXIS REPLACING
  OPERATION PROCEDURE )
            │
            ▼
┌─────────────────────────────────────────┐
│ REPLACE AT LEAST ONE OF TWO AXES USED    │  S21
│ IN SEARCH SPACE WITH REPLACEMENT         │
│ SEARCH AXIS SPECIFIED BY USER            │
└─────────────────────────────────────────┘
            │
            ▼
┌─────────────────────────────────────────┐
│ MAP AND DISPLAY TUNES USING TWO          │  S22
│ SEARCH AXES AFTER REPLACEMENT            │
└─────────────────────────────────────────┘
            │
            ▼
┌─────────────────────────────────────────┐
│ UPDATE USE FREQUENCY OF                  │  S23
│ REPLACEMENT SEARCH AXIS                  │
└─────────────────────────────────────────┘
            │
            ▼
        ( RETURN )
```

# FIG.19

```
( START NARROWING-DOWN AXIS
  SELECTING OPERATION PROCEDURE )
            │
            ▼
┌─────────────────────────────────────────┐
│ REPLACE AT LEAST ONE OF TWO AXES         │  S41
│ USED IN SEARCH SPACE WITH                │
│ NARROWING-DOWN AXIS SELECTED             │
│ BY USER                                  │
└─────────────────────────────────────────┘
            │
            ▼
┌─────────────────────────────────────────┐
│ MAP AND DISPLAY TUNES USING TWO          │  S42
│ SEARCH AXES AFTER REPLACEMENT            │
└─────────────────────────────────────────┘
            │
            ▼
┌─────────────────────────────────────────┐
│ UPDATE USE FREQUENCY OF                  │  S43
│ NARROWING-DOWN AXIS                      │
└─────────────────────────────────────────┘
            │
            ▼
        ( RETURN )
```

# FIG.20

```
        ┌────────────────────────────┐
        │   START TUNE SELECTING      │
        │   OPERATION PROCEDURE       │
        └────────────────────────────┘
                      │
                      ▼
  ┌──────────────────────────────────────┐ S61
  │ SELECT TYPICAL TUNE FROM             │
  │ CURRENTLY-SELECTED TUNES, AND        │
  │ REPRODUCE CHORUS OF THIS TUNE        │
  └──────────────────────────────────────┘
                      │
                      ▼
        ⟨ REPRODUCING OF CHORUS   ⟩ S62  ──── NO ───┐
        ⟨ HAS BEEN COMPLETED?     ⟩                 │
                      │ YES                         │
                      ▼                             │
YES ◄──⟨ CONDITION FOR FINISHING   ⟩ S63           │
        ⟨ PROCEDURE HAS BEEN SATISFIED? ⟩          │
                      │ NO                          │
                      ▼                             │
  ┌──────────────────────────────────────┐ S64     │
  │ REPRODUCE CHORUS OF NEXT TUNE        │─────────┘
  │ AMONG CURRENTLY-SELECTED TUNES       │
  └──────────────────────────────────────┘
          │
          ▼
      ( RETURN )
```

# FIG.21

```
┌─────────────────────────────────┐
│ START RANGE SPECIFICATION       │
│ OPERATION/MAGNIFYING            │
│ OPERATION PROCEDURE             │
└─────────────────────────────────┘
                 │
                 ▼
┌─────────────────────────────────────────┐
│ MAGNIFY SPECIFIED RANGE OR PREDETERMINED │ S81
│ RANGE TO BE MAGNIFIED, AND MAP AND DISPLAY│
│ TUNES                                    │
└─────────────────────────────────────────┘
                 │
                 ▼
┌─────────────────────────────────────────┐
│ DISPLAY DETAILED INFORMATION (ADDITIONAL │ S82
│ INFORMATION) CONCERNING TUNES IN         │
│ ACCORDANCE WITH MAGNIFYING POWER         │
└─────────────────────────────────────────┘
                 │
                 ▼
┌─────────────────────────────────────────┐
│ DETERMINE TO-BE-REPLACED AXIS            │ S83
│ (SEARCH AXIS HAVING SMALLER VARIANCE     │
│ OF TWO SEARCH AXES BEING USED)           │
└─────────────────────────────────────────┘
                 │
                 ▼
┌─────────────────────────────────────────┐
│ CALCULATE VARIANCE OF SELECTED TUNES WITH│ S84
│ RESPECT TO EACH OF SEARCH AXES EXCEPT    │
│ THOSE BEING USED                         │
└─────────────────────────────────────────┘
                 │
                 ▼
┌─────────────────────────────────────────┐
│ CALCULATE SCORE BY MULTIPLYING VARIANCE BY│ S85
│ USE FREQUENCY OF SEARCH AXIS, USE FREQUENCY│
│ OF COMBINATION OF SEARCH AXIS AND TO-BE-LEFT│
│ SEARCH AXIS, USE FREQUENCY OF SEARCH AXIS │
│ AS TO-BE-REPLACED AXIS (X-AXIS OR Y-AXIS), AND│
│ NEGATIVE CORRELATION OF SEARCH AXIS WITH  │
│ TO-BE-LEFT SEARCH AXIS                    │
└─────────────────────────────────────────┘
                 │
                 ▼
┌─────────────────────────────────────────┐
│ PRESENT SOME SEARCH AXES HAVING HIGH SCORES│ S86
│ TO USER AS NARROWING-DOWN AXIS CANDIDATES│
└─────────────────────────────────────────┘
                 │
                 ▼
            ┌──────────┐
            │  RETURN  │
            └──────────┘
```

# FIG.22

```
┌─────────────────────────────┐
│     START REPRODUCING       │
│    OPERATION PROCEDURE      │
└─────────────────────────────┘
               │
               ▼
┌─────────────────────────────┐
│  ADD CURRENTLY-SELECTED     │ S101
│  TUNES TO PLAYLIST          │
└─────────────────────────────┘
               │
               ▼
┌─────────────────────────────┐
│  REPRODUCE TUNES IN PLAYLIST│ S102
└─────────────────────────────┘
               │
               ▼
┌─────────────────────────────┐  S103
│  REPRODUCING OF ALL TUNES IN│
│  PLAYLIST HAS BEEN COMPLETED?│  NO
└─────────────────────────────┘
               │ YES
               ▼
        ┌──────────────┐
        │    RETURN    │
        └──────────────┘
```

# FIG.23

# FIG.24

- MAP PRESENTATION SECTION — 105
- CURRENTLY-SELECTED TUNES
- METADATA DB — 103
- SEARCH AXIS USE FREQUENCY HOLDING SECTION — 104
- ENTROPY/VARIANCE CALCULATION SECTION — 151
- USE FREQUENCY MULTIPLICATION SECTION — 152
- HIGH-SCORE SEARCH AXIS EXTRACTION SECTION — 153
- 106
- NARROWING-DOWN AXIS CANDIDATES
- DISPLAY SECTION — 102

EP 1 975 824 A1

# FIG.25

EP 1 975 824 A1

**European Patent Office**

**EUROPEAN SEARCH REPORT**

Application Number

EP 08 25 0306

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 405 195 B1 (AHLBERG CHRISTOPHER [US]) 11 June 2002 (2002-06-11) * abstract; figure 5 * * column 2, line 17 - line 25 * * column 6, line 17 - line 61 * ----- | 1-8 | INV. G06F17/30 |
| X | WO 02/27508 A (ALLTRUE NETWORKS INC [US]) 4 April 2002 (2002-04-04) * abstract; figure 10 * * page 6, line 26 - page 7, line 4; figure 2 * * page 9, line 13 - line 24; figure 7 * ----- | 1-8 | |
| X | WO 00/39338 A (ROSETTA INPHARMATICS INC [US]) 6 July 2000 (2000-07-06) * abstract * * line 15 - page 33, line 5; figures 18,19 * * page 32, line 15 - page 33, line 5; figures 18,19 * ----- | 1-8 | |
| X | US 5 894 311 A (JACKSON JERRY R [US]) 13 April 1999 (1999-04-13) * column 10, line 42 - column 11, line 5; figures 6,7 * * abstract * ----- | 1-8 | TECHNICAL FIELDS SEARCHED (IPC) G06F |
| A | JIAJUN ZHU ET AL: "Perceptual Visualization of a Music Collection" MULTIMEDIA AND EXPO, 2005. ICME 2005. IEEE INTERNATIONAL CONFERENCE ON AMSTERDAM, THE NETHERLANDS 06-06 JULY 2005, PISCATAWAY, NJ, USA,IEEE, 6 July 2005 (2005-07-06), pages 1058-1061, XP010843327 ISBN: 0-7803-9331-7 * abstract * * page 1060, left-hand column, line 40 - right-hand column, line 12; figure 4 * ----- | 1-8 | |

The present search report has been drawn up for all claims

| Place of search | Date of completion of the search | Examiner |
|---|---|---|
| Berlin | 24 April 2008 | Deane, Inigo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 25 0306

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2008

| Patent document cited in search report | | Publication date | Patent family member(s) | | Publication date |
|---|---|---|---|---|---|
| US 6405195 | B1 | 11-06-2002 | US | 7216116 B1 | 08-05-2007 |
| WO 0227508 | A | 04-04-2002 | AU | 9476801 A | 08-04-2002 |
| WO 0039338 | A | 06-07-2000 | AU | 776429 B2 | 09-09-2004 |
| | | | AU | 2208000 A | 31-07-2000 |
| | | | CA | 2356655 A1 | 06-07-2000 |
| | | | EP | 1141406 A1 | 10-10-2001 |
| | | | JP | 2002533700 T | 08-10-2002 |
| | | | US | 2002165674 A1 | 07-11-2002 |
| | | | US | 6453241 B1 | 17-09-2002 |
| | | | US | 6847897 B1 | 25-01-2005 |
| US 5894311 | A | 13-04-1999 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000207415 A